# EUROPEAN PATENT APPLICATION

(11) **EP 4 712 662 A1**
(43) Date of publication of application: **18.03.2026**
(21) Application number: 23950045.7
(22) Date of filing: 28.08.2023
(51) Int. Cl.: H04W 72/512

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); LI, Yapu, Dongguan, Guangdong 523860 (CN); GAO, Ning, Dongguan, Guangdong 523860 (CN)
(74) Representative: RGTH
(86) International application number: PCT/CN2023/115320
(87) International publication number: WO 2025/043451

(57) **Abstract**

Provided are a wireless communication method and a device. The method comprises: in a first TXOP, a first STA sending first uplink transmission to an AP, wherein the first STA reserves one or more frequency-domain units in the first uplink transmission, the one or more frequency-domain units are used for reporting first indication information by means of a second STA, and the first indication information is used for indicating that the second STA includes low-latency traffic to be transmitted, and/or the second STA needs to preempt the first TXOP. By means of the one or more frequency-domain units reserved by the first STA, the second STA may report the first indication information. On the basis of the first indication information, the second STA may preempt the first TXOP, thereby transmitting the low-latency traffic in a timely manner.

## Description

### TECHNICAL FIELD

The present disclosure relates to the field of communication technologies, and in particular, to a wireless communication method and a communication device.

### BACKGROUND

For event-driven low-latency traffic, its unpredictability makes it impossible to be transmitted by pre-scheduling appropriate resources, so how to improve transmission performance of latency-sensitive traffic is a problem that needs to be solved.

### SUMMARY

The present disclosure provides a wireless communication method and a communication device. The following is an introduction to various aspects involved in the present disclosure.

In a first aspect, a wireless communication method is provided. The method includes: transmitting, by a first station (STA), a first uplink transmission to an access point (AP) in a first transmission opportunity (TXOP); where the first STA reserves one or more frequency domain units in the first uplink transmission, and the one or more frequency domain units are used for a second STA to report first indication information, and the first indication information is used to indicate: that the second STA comprises low-latency traffic to be transmitted, and/or that the second STA needs to preempt the first TXOP.

In a second aspect, a wireless communication method is provided. The method includes: reporting, by a second STA, first indication information to an AP on one or more frequency domain units in a first TXOP; where the one or more frequency domain units are frequency domain resources that are reserved by a first STA in a first uplink transmission, and the first indication information is used to indicate that: the second STA comprises low-latency traffic to be transmitted, and/or the second STA needs to preempt the first TXOP.

In a third aspect, a wireless communication method is provided, and the method includes: receiving, by an AP, a first uplink transmission of a first STA in a first TXOP; where the first STA reserves one or more frequency domain units in the first uplink transmission, and the one or more frequency domain units are used for a second STA to report first indication information, and the first indication information is used to indicate that: the second STA comprises low-latency traffic to be transmitted, and/or the second STA needs to preempt the first TXOP.

In a fourth aspect, a communication device is provided, the communication device is a first STA, and the communication device includes: a transmitting unit, configured to transmit a first uplink transmission to an AP in a first TXOP; where the first STA reserves one or more frequency domain units in the first uplink transmission, and the one or more frequency domain units are used for a second STA to report first indication information, and the first indication information is used to indicate that: the second STA comprises low-latency traffic to be transmitted, and/or the second STA needs to preempt the first TXOP.

In a fifth aspect, a communication device is provided, the communication device is a second STA, and the communication device includes: a reporting unit, configured to report first indication information to an AP on one or more frequency domain units in a first TXOP; where the one or more frequency domain units are frequency domain resources that are reserved by a first STA in a first uplink transmission, and the first indication information is used to indicate that: the second STA comprises low-latency traffic to be transmitted, and/or the second STA needs to preempt the first TXOP.

In a sixth aspect, a communication device is provided, the communication device is an AP, and the communication device includes: a receiving unit, configured to receive a first uplink transmission of a first station (STA) in a first TXOP; where the first STA reserves one or more frequency domain units in the first uplink transmission, and the one or more frequency domain units are used for a second STA to report first indication information, and the first indication information is used to indicate that: the second STA comprises (i.e., the second STA has) low-latency traffic to be transmitted, and/or the second STA needs to preempt the first TXOP.

In a seventh aspect, a communication device is provided, and includes a processor and a memory, where the memory is configured to store one or more computer programs, and the processor is configured to invoke the computer program stored in the memory, to cause the communication device to perform some or all of the steps in the method of the first aspect.

In an eighth aspect, the embodiments of the present disclosure provide a communication system, and the system includes the above-mentioned communication device. In another possible design, the system may further include other devices that interact with the communication device in the solutions provided in the embodiments of the present disclosure.

In a ninth aspect, the embodiments of the present disclosure provide a computer-readable storage medium, where the computer-readable storage medium stores a computer program, and the computer program causes a communication device to perform some or all of the steps in the methods of the above aspects.

In a tenth aspect, the embodiments of the present disclosure provide a computer program product, where the computer program product includes a non-transitory computer-readable storage medium storing a computer program, and the computer program is operable to cause a communication device to perform some or all of the steps in the methods of the above aspects. In some implementations, the computer program product may be a software installation package.

In an eleventh aspect, the embodiments of the present disclosure provide a chip, and the chip includes a memory and a processor, where the processor may invoke and run the computer program from the memory, to implement some or all of the steps in the methods of the above aspects.

The second STA may report the first indication information via one or more frequency domain units reserved by the first STA. Based on the first indication information, the second STA may preempt the first TXOP, thereby achieving a timely transmission of low-latency traffic.

### BRIEF DESCRIPTION OF THE DRAWINGS

FIG. 1 is a schematic diagram of a wireless communication system applied in the embodiments of the present disclosure.
FIG. 2 is an example diagram of a buffer status report polling trigger frame format.
FIG. 3 is an example diagram of a quality of service null frame format.
FIG. 4 is an example diagram of a null data physical protocol data unit feedback report polling trigger frame format.
FIG. 5 is an example diagram of a null data physical transmission protocol data unit feedback parameter set element format.
FIG. 6 is an example diagram of a high efficiency trigger based feedback null data physical protocol data unit format.
FIG. 7 is an example diagram of a low-latency transmission resource reservation solution based on puncturing.
FIG. 8 is an example diagram of a solution for indicating low-latency data traffic based on an overlapping physical layer protocol data unit (PHY protocol data unit, PPDU).
FIG. 9 is an example diagram of frequency domain resources of a low-latency indication frame.
FIG. 10 is an example diagram of a technical solution for transmitting a preemption request by using a smaller interframe space.
FIG. 11 is an example diagram of a transmission process of a preemption request corresponding to FIG. 10.
FIG. 12 is a schematic flowchart of a wireless communication method provided in the embodiments of the present disclosure.
FIG. 13 is a schematic diagram of a first trigger frame format provided in the embodiments of the present disclosure.
FIG. 14 is an example diagram of a high efficiency sounding null data physical protocol data unit (HE sounding NDP) format.
FIG. 15 is an example diagram of an extremely high throughput sounding null data physical protocol data unit (EHT sounding NDP) format.
FIG. 16 is an example diagram of an ultra high reliability sounding null data physical protocol data unit (UHR sounding NDP) format.
FIG. 17 is a schematic diagram of a second-type PPDU format provided in the embodiments of the present disclosure.
FIG. 18 is a schematic diagram of a format of a second trigger frame provided in the embodiments of the present disclosure.
FIG. 19 is a schematic diagram of a format of another second trigger frame provided in the embodiments of the present disclosure.
FIG. 20 is a schematic diagram of a format of another second trigger frame provided in the embodiments of the present disclosure.
FIG. 21 is a schematic diagram of a format of another second trigger frame provided in the embodiments of the present disclosure.
FIG. 22 is a schematic diagram of a format of another second trigger frame provided in the embodiments of the present disclosure.
FIG. 23 is a schematic diagram of a format of another second trigger frame provided in the embodiments of the present disclosure.
FIG. 24 is a schematic diagram of a format of a block acknowledgement (ACK) frame provided in the embodiments of the present disclosure.
FIG. 25 is an example diagram of a wireless communication method provided in the embodiments of the present disclosure.
FIG. 26 is an example diagram of a wireless communication method provided in Embodiment 1 of the present disclosure.
FIG. 27 is an example diagram of a wireless communication method provided in Embodiment 2 of the present disclosure.
FIG. 28 is an example diagram of a wireless communication method provided in Embodiment 3 of the present disclosure.
FIG. 29 is an example diagram of a wireless communication method provided in Embodiment 4 of the present disclosure.
FIG. 30 is an example diagram of a wireless communication method provided in Embodiment 5 of the present disclosure.
FIG. 31 is an example diagram of a wireless communication method provided in Embodiment 7 of the present disclosure.
FIG. 32 is an example diagram of another wireless communication method provided in Embodiment 7 of the present disclosure.
FIG. 33 is an example diagram of another wireless communication method provided in Embodiment 7 of the present disclosure.
FIG. 34 is a schematic structural diagram of a communication device provided in the embodiments of the present disclosure.
FIG. 35 is a schematic structural diagram of another communication device provided in the embodiments of the present disclosure.
FIG. 36 is a schematic structural diagram of another communication device provided in the embodiments of the present disclosure.
FIG. 37 is a schematic structural diagram of an apparatus for communication provided in the embodiments of the present disclosure.

### DETAILED DESCRIPTION

The technical solutions in the present disclosure will be described below with reference to the drawings.

### Communication system

The technical solutions of the embodiments of the present disclosure may be applied to various communication systems, such as: wireless local area networks (WLAN), wireless fidelity (WiFi), or other communication systems, etc.

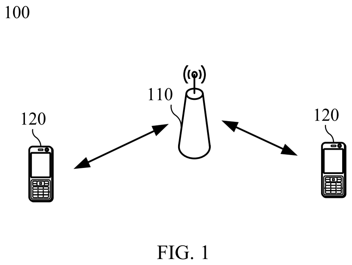

FIG. 1 is a wireless communication system 100 applied in the embodiments of the present disclosure. The wireless communication system 100 may include an access point (AP) 110, and stations (STAs) 120 accessing a network via the access point 110.

In some scenarios, the AP is also referred to as an AP STA, that is, in a sense, the AP is also a STA.

In some scenarios, the STA is also referred to as a non-AP STA.

The communication in the communication system 100 may be communication between an AP and a STA, communication between a STA and a STA, or communication between a STA and a peer STA, where the peer STA may refer to a device that communicates with the STA peer-to-peer, and for example, the peer STA may be an AP or a STA.

The AP is equivalent to a bridge for connecting a wired network and a wireless network, a main function thereof is to connect various wireless network clients together and then connect the wireless network to Ethernet. An AP device may be a terminal device (e.g., a mobile phone) or a network device (e.g., a router) with a WiFi chip.

It should be understood that the role of the STA in the communication system is not absolute, and for example, in some scenarios, when a mobile phone is connected to a router, the mobile phone is a STA, and when the mobile phone serves as a hotspot for other mobile phones, the mobile phone plays the role of an AP.

The AP and the STA may be devices applied in the Internet of Vehicles, Internet of Things nodes, sensors or the like in the Internet of Things (IoT), smart cameras, smart remote controls, smart water, electricity meters or the like in smart homes, and sensors in smart cities, etc.

In some embodiments, both the STA and the AP may support the 802.11be standard. The STA or the AP may also support various current and future 802.11 families' WLAN standards, such as 802.11ax, 802.11ac, 802.11n, 802.11g, 802.11b, and 802.11a, etc.

There is one or more links between the station and the access point. In some embodiments, the station and the access point support multi-band communication. For example, the communication is performed simultaneously on 2.4 GHz, 5 GHz, 6 GHz, 45 GHz, and 60 GHz frequency bands, or the communication is performed simultaneously on different channels of a same frequency band (or different frequency bands), which improves communication throughput and/or reliability between the devices. This device is usually referred to as a multi-band device, or a multi-link device (MLD), and is sometimes also referred to as a multi-link entity or a multi-band entity. A multi-link device may be an access point device or a station device. If the multi-link device is an access point device, the multi-link device includes one or more APs; and if the multi-link device is a station device, the multi-link device includes one or more non-AP STAs.

The multi-link device including one or more APs may be referred to as an access point multi-link device (AP MLD), and the multi-link device including one or more non-AP STAs may be referred to as a non-access point multi-link device (non-ap multi-link device, Non-AP MLD).

In the embodiments of the present disclosure, the AP may include multiple APs, the Non-AP includes multiple STAs, multiple links may be formed between the APs in the AP and the STAs in the Non-AP, and data communication may be performed between an AP in the AP and a corresponding STA in the Non-AP via a corresponding link.

In the embodiments of the present disclosure, the STA may be a mobile phone, a tablet computer (Pad), a laptop computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in a smart city, a wireless terminal in a smart home, etc., that supports WLAN/WiFi technologies.

Frequency bands that can be supported by the WLAN technology may include but be not limited to: low frequency bands (e.g., 2.4 GHz, 5 GHz, and 6 GHz) and high frequency bands (e.g., 45 GHz and 60 GHz).

FIG. 1 exemplarily shows an AP and two STAs, and optionally, the communication system 100 may include multiple APs and other numbers of STAs, which is not limited in the embodiments of the present disclosure.

It should be understood that a device having a communication function in a network/system in the embodiments of the present disclosure may be referred to as a communication device. Taking the communication system 100 shown in FIG. 1 as an example, the communication device may include an access point 110 and stations 120 with communication functions, and the access point 110 and the stations 120 may be the specific devices described above and will not be repeated here; the communication device may further include other devices in the communication system 100, such as a network controller, a gateway, and other network entities, which is not limited in the embodiments of the present disclosure.

The AP and the STA may be deployed on land, which includes indoor or outdoor, in handheld or vehicle-mounted; may also be deployed on water; may also be deployed on an airplane, a balloon, and a satellite in the air. The embodiments of the present disclosure do not limit the scenarios in which the AP and the STA are located.

It should be understood that all or some of the functions of the communication device in the present disclosure may also be implemented through software functions running on hardware, or implemented through virtualization functions instantiated on a platform (such as a cloud platform).

### Uplink orthogonal frequency division multiple access-based random access (UORA) mechanism

The AP shall indicate the range of an orthogonal frequency division multiple access (OFDMA) contention window (OFDMA contention window, OCW) in a UORA parameter set element, so that the non-AP STA initiates random access after a trigger frame is transmitted.

A non-AP high efficiency STA (Non-AP HE STA) shall maintain an internal OCW and an internal orthogonal frequency division multiple access random access backoff (OFDMA random access backoff, OBO) counter. OCW is an integer in the range of OCWₘᵢₙ to OCWₘₐₓ. (A non-AP HE STA shall maintain an internal OCW and an internal OBO counter. OCW is an integer in the range OCWₘᵢₙ to OCWₘₐₓ).

The size of all random access (RA) resource units (RUs) in the set shall be the same as the size of the random access resource unit (RA-RU) indicated by the RU allocation subfield in the user information field. The non-AP HE STA shall determine the total number of eligible RA-RUs in a contiguous set according to the number of RA-RU subfields in the user information field corresponding to an eligible RA-RU, excluding RA-RUs that are not within its operating bandwidth. (The size of all RA-RUs in the set shall be the same and equal to the size of the RA-RU indicated by the RU Allocation subfield in the User Info field. A non-AP HE STA shall determine the total number of eligible RA-RUs in a contiguous set from the Number Of RA-RU subfields (see Table 9-92 (RA-RU Information subfield format (11ax))) in the User Info field corresponding to an eligible RA-RU, excluding RA-RUs that are not within its operating bandwidth).

If a high efficiency STA (HE STA) has a pending frame for the AP upon the reception of a trigger frame including at least one eligible RA-RU and if the OBO counter of the HE STA is not greater than the number of eligible RA-RUs in a trigger frame from that AP, then the HE STA shall set its OBO counter to zero and randomly select one of the eligible RA-RUs to be considered for transmission. Otherwise, the HE STA decrements its OBO counter by the number of eligible RA-RUs in the trigger frame. (If an HE STA has a pending frame for the AP upon the reception of a Trigger frame comprising at least one eligible RA-RU and if the OBO counter of an HE STA is not greater than the number of eligible RA-RUs in a Trigger frame from that AP, then the HE STA shall set its OBO counter to zero and randomly select one of the eligible RA-RUs to be considered for transmission. Otherwise, the HE STA decrements its OBO counter by the number of eligible RA-RUs in the Trigger frame.)

For the HE STA or the HE AP, the maximum RU types and numbers that can be used under each channel bandwidth (CBW) are shown in Table 1.

**Table 1**

| RU Type | CBW20 | CBW40 | CBW80 | CBW80+80 and CBW160 |
|---|---|---|---|---|
| 26-tone RU | 9 | 18 | 37 | 74 |
| 52-tone RU | 4 | 8 | 16 | 32 |
| 1066-tone RU (106-tone RU) | 2 | 4 | 8 | 16 |
| 242-tone RU | 1 | 2 | 4 | 8 |
| 484-tone RU | N/A | 1 | 2 | 4 |
| 996-tone RU | N/A | N/A | 1 | 2 |
| 2×996 tone RU | N/A | N/A | N/A | 1 |

For an extremely high throughput (EHT) STA or an EHT AP, the maximum RU types and numbers that can be used under each CBW are shown in Table 2, and the tone plan for EHT at 80 MHz is different from that for HE.

**Table 2**

| RU Type | CBW20 | CBW40 | CBW80 | CBW80+80 and CBW160 | CBW320 |
|---|---|---|---|---|---|
| 26-tone RU | 9 | 18 | 36 | 72 | 148 |
| 52-tone RU | 4 | 8 | 16 | 32 | 64 |
| 1066-tone RU (106-tone RU) | 2 | 4 | 8 | 16 | 32 |
| 242-tone RU | 1 | 2 | 4 | 8 | 16 |
| 484-tone RU | N/A | 1 | 2 | 4 | 8 |
| 996-tone RU | N/A | N/A | 1 | 2 | 3 |
| 2×996 tone RU | N/A | N/A | N/A | 1 | 2 |
| 4×996 tone RU | N/A | N/A | N/A | N/A | 1 |

It should be noted that the tone in the present disclosure may also be referred to as a subcarrier, that is, the tone and the subcarrier may be interchangeable.

### Buffer status report (BSR)

The AP transmits BSR polling (BSRP) trigger frames to acquire buffer status reports of multiple STAs, and the STA indicates the data volume in the buffer queue corresponding to at least one of its traffic identifiers (TIDs), in a QoS control field in at least one frame (e.g., a quality of service (QoS) Null frame) included in a physical layer protocol data unit (PPDU) with which it may respond, and indicates the data volume in the buffer queue corresponding to at least one of its access categories (ACs), in a buffer status report control (BSR Control) subfield in an aggregate control (A-Control) subfield of a high-efficiency (HE) variant of a high throughput (HT) control field in at least one QoS Null frame.

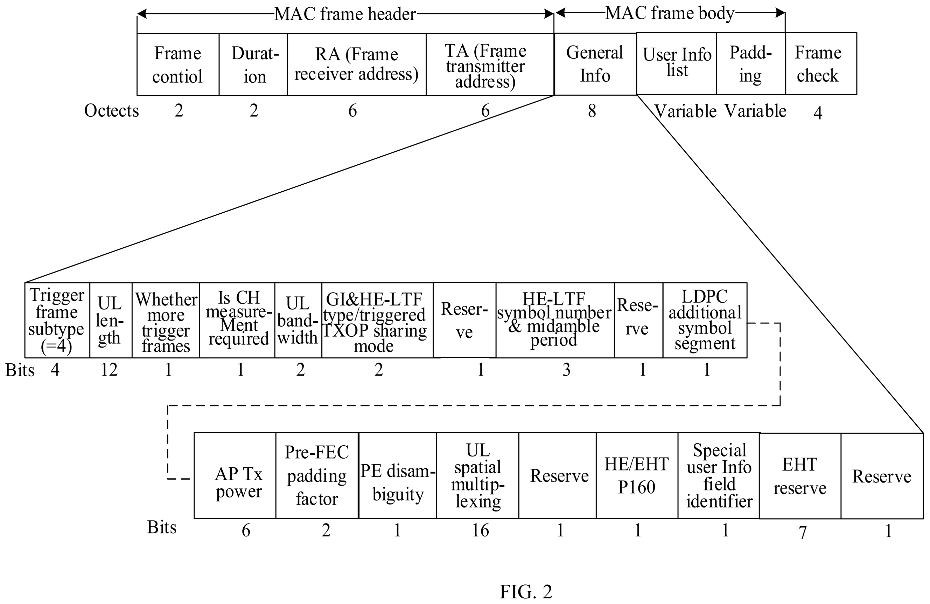

Specifically, for example, the BSRP trigger frame may be shown in FIG. 2, where a general information field in the BSRP trigger frame includes the following fields: trigger frame type (=4) (occupying 4 bits), uplink length (occupying 12 bits), whether there are more trigger frames (occupying 1 bit), whether channel measurement is required (occupying 1 bit), uplink bandwidth (occupying 2 bits), guard interval (GI) and high efficiency long training field (HE-LTF) type/triggered transmission opportunity sharing mode (occupying 2 bits), number of HE-LTF symbols and midamble period (occupying 3 bits), low-density parity check (LDPC) additional symbol segmentation (occupying 1 bit), AP transmission power (occupying 6 bits), pre-forward error correction (Pre-FEC) padding factor (occupying 2 bits), packet extension (PE) disambiguity (occupying 1 bit), uplink spatial multiplexing (occupying 16 bits), HE/EHT primary 160 (P160) (occupying 1 bits), special user information field identifier (occupying 1 bit), EHT reservation (occupying 7 bits).

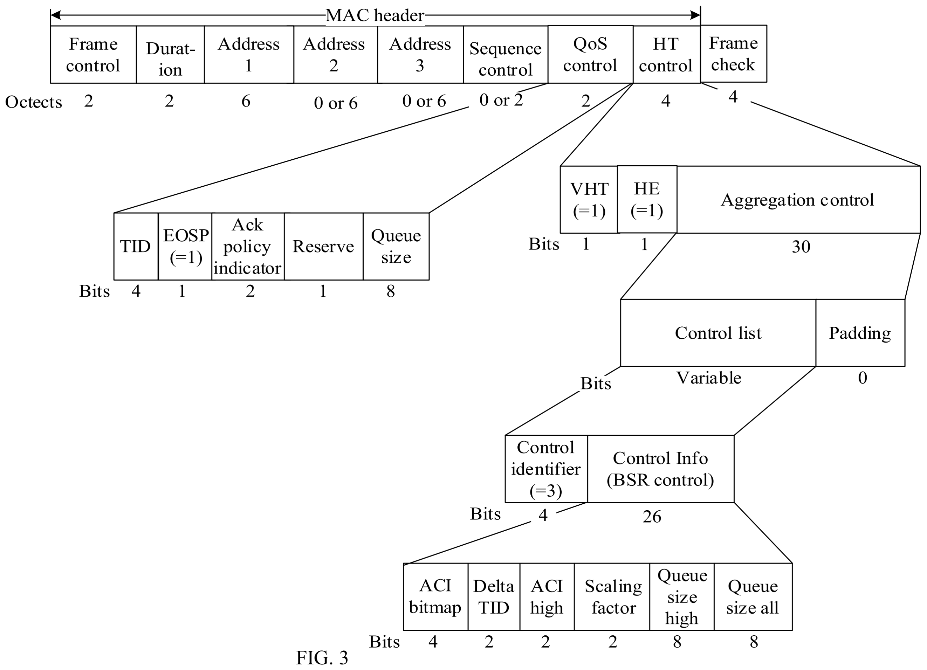

Specifically, for example, a QoS Null frame may be as shown in FIG. 3, where a media access control (MAC) header in the QoS Null frame includes a QoS control field and an HT control field. The QoS control field includes the following fields: traffic identifier (TID) (occupying 4 bits), end of service period (EOSP) (=1) (occupying 1 bit), ack policy indicator (occupying 2 bits), and queue size (occupying 8 bits). The HT control field includes the following fields: very high throughput (VHT) (occupying 1 bit), HE (occupying 1 bit), and aggregation control (occupying 30 bits); where the control list field in the aggregation control field includes a control information (BSR control) field, and the control information (BSR control) field includes the following fields: access category index (ACI) bitmap (ACI bitmap), delta traffic identifier (delta TID), high priority access category (ACI High), scaling factor, high priority queue size (Queue Size High), and queue size all (Queue Size All).

### Null data physical protocol data unit feedback report (NFR)

The access point transmits a null data physical protocol data unit feedback report polling (NFRP) trigger frame, to acquire null data physical transmission protocol data unit feedback of multiple stations, and the station, after receiving the NFRP trigger frame, transmits an NDP (or referred to as high efficiency trigger based feedback null data physical protocol data unit (HE TB feedback NDP)) as a response. When the number of octets of the buffered data is greater than or equal to a resource request buffer threshold indicated by the access point, the feedback status (FEEDBACK_STATUS) value of the station (this transmission variable will be used to modulate a subcarrier for transmitting the long training field (LTF) of the NDP) is 1; otherwise, the FEEDBACK_STATUS value of the station is 0. The resource request buffer threshold is previously indicated by the access point in a null data physical transmission protocol data unit feedback parameter set (NDP Feedback Report Parameter Set) element in a beacon frame and/or a probe response frame and/or an association response frame and/or a reassociation response frame, or in a case where no such indication is received, the resource request buffer threshold is a default value of 256 octets.

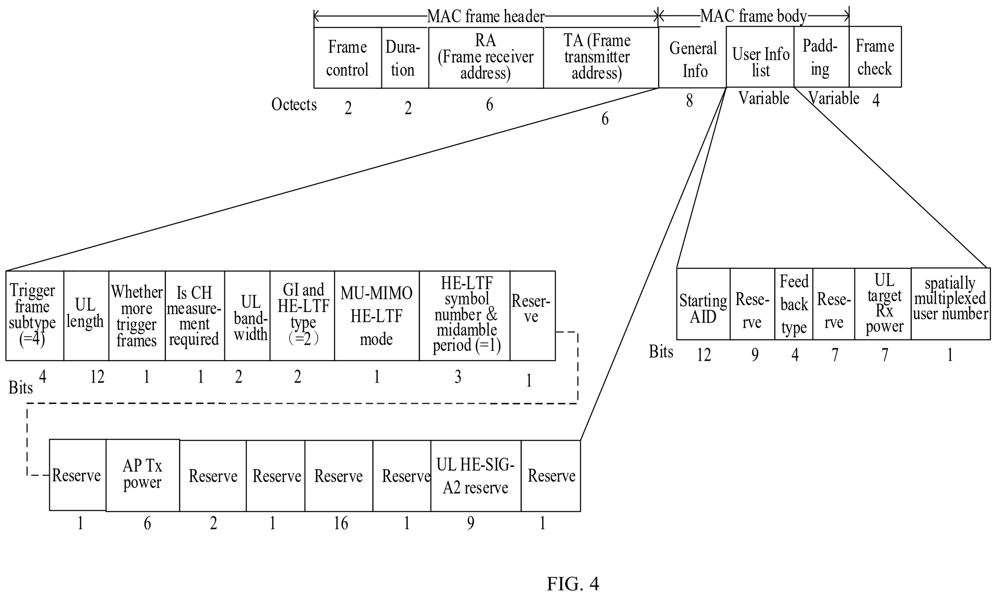

Specifically, the NFRP trigger frame may be shown in FIG. 4; where the general information field includes the following fields: trigger frame type (=4) (occupying 4 bits), uplink length (occupying 12 bits), whether there are more trigger frames (occupying 1 bit), whether channel measurement is required (occupying 1 bit), uplink bandwidth (occupying 2 bits), GI and HE-LTF type (=2) (occupying 2 bits), multiple users multiple-in multiple-out (MU-MIMO) HE-LTF mode (occupying 1 bit), number of HE-LTF symbols and midamble period (=1) (occupying 3 bits), AP transmission power (occupying 6 bits), uplink high efficiency-SINGAL field-A2 (HE-SIG-A2) reservation (occupying 9 bits); where the user information list field includes the following fields: starting association identifier (AID), feedback type, uplink target received power, and number of spatially multiplexed users.

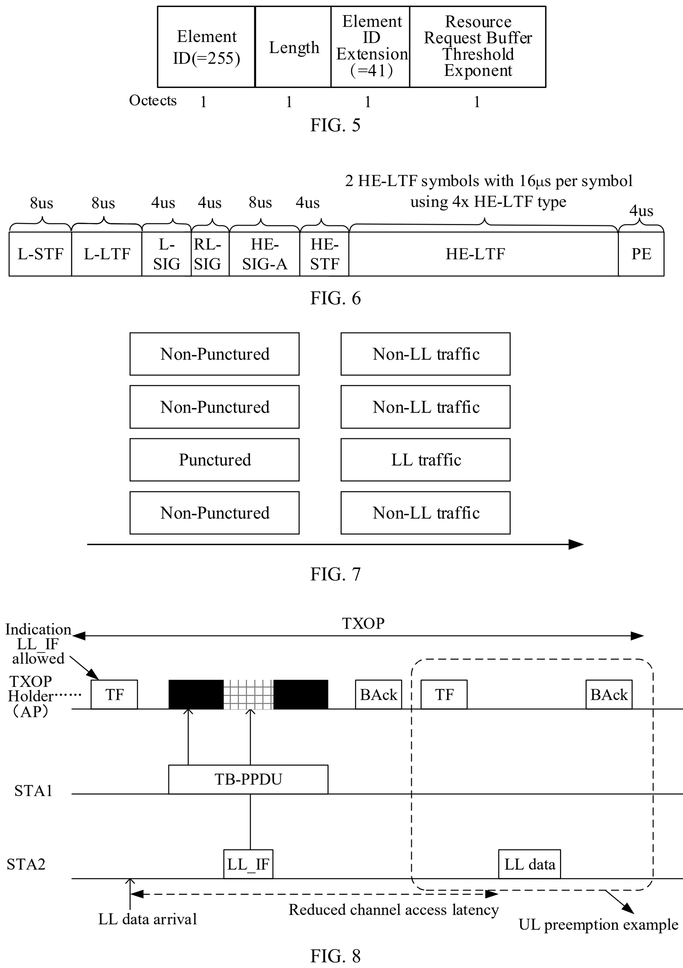

The NDP Feedback Report Parameter Set element may be as shown in FIG. 5. The Resource Request Buffer Threshold Exponent field is used to calculate the buffer threshold between two different resource requests as defined in 26.5.7.4 (NDP feedback report for a resource request). The resource request buffer threshold is equal to 2 ^{(Resource Request Buffer Threshold Exponent)} octets. (The Resource Request Buffer Threshold Exponent field is used to calculate the buffer threshold between two different resource requests as defined in 26.5.7.4 (NDP feedback report for a resource request) . The resource request buffer threshold value is equal to 2 ^{(Resource Request Buffer Threshold Exponent)} octets.)

The resource request buffer threshold is equal to 256 octets if no NDP Feedback Report Parameter Set element is carried by the AP in any transmitted frame. (The resource request buffer threshold is equal to 256 octets if no NDP Feedback Report Parameter Set element is transmitted by the AP.)

The HE TB feedback NDP format is shown in FIG. 6. The HE TB feedback NDP includes the following fields: a legacy short training field (L-STF), a legacy long training field (L-LTF), a legacy signal (L-SIG), a repeat legacy signal (RL-SIG), a high efficiency signal A (HE-SIG-A), a high efficiency short training field (HE-STF), a high efficiency long training field (HE-LTF), and packet extension (PE). As shown in FIG. 6, there are 2 HE-LTF symbols with 16 µs per symbol using 4x HE-LTF type (2 HE-LTF symbols with 16 µs per symbol using 4x HE-LTF).

The NDP format uses a high efficiency trigger based PPDU (HE TB PPDU) format, except that there is no data field, the PE field duration is 0 microseconds (µs), there are 2 symbols using 4x HE-LTF type, and the guard interval (GI) used is 3.2 microseconds. The duration of 1x HE-LTF symbol is 3.2 microseconds, the duration of 2x HE-LTF symbol is 6.4 microseconds, and the duration of 4x HE-LTF symbol is 12.8 microseconds, and the guard interval is not included in each duration.

The different RU tone set indices (RU_TONE_SET_INDEX) in the HE-LTF field are used to identify AIDs and feedback information (FEEDBACK_STATUS) of different Non-AP STAs. Specifically, the HE-LTF subcarrier mapping relationship in the HE TB feedback NDP may be as shown in Table 3.

**Table 3**

| RU_ TON E_ SET_ IND EX | 80MHz | | 40 MHz | | 20 MHz | |
|---|---|---|---|---|---|---|
| | K_{tone_NDPu} if feedback information is 1 (K_{tone_NDPu} if FEEDBACK_ STATUS is 1) | K_{tone_NDPu} if feedback information is 0 (K_{tone_NDPu} if FEEDBACK_ STATUS is 0) | K_{tone_NDPu} if feedback information is 1 (K_{tone_NDPu} if FEEDBACK_ STATUS is 1) | K_{tone_NDPu} if feedback information is 0 (K_{tone_NDPu} if FEEDBACK_ STATUS is 0) | K_{tone_NDPu} if feedback information is 1 (K_{tone_NDPu} if FEEDBA CK STATUS is 1) | K_{tone_NDPu} if feedback information is 0 (K_{tone_NDPu} if FEEDBA CK_ STATUS is 0) |
| 1 | Use 20MHz feedback information = 1 Subcarrier Indices -384 (Use 20MHz FEEDBACK _STATUS = 1 Subcarrier Indices -384) | Use 20MHz feedback information = 0 Subcarrier Indices -384 (Use 20 MHz FEEDBACK _ST ATUS = 0 Subcarrier Indices-384) | Use 20MHz feedback information = 1 Subcarrier Indices -128 (Use 20 MHz FEEDBACK _ST ATUS = 1 Subcarrier Indices-128) | Use 20MHz feedback information = 0 Subcarrier Indices -128 (Use 20 MHz FEEDBACK_ST ATUS = 0 Subcarrier Indices-128) | -113, -77, -41, 6, 42, 78 | -112, -76, -40, 7, 43, 79 |
| 2 | | | | | -111, - 75, -39, 8, 44, 80 | -110, - 74, -38, 9, 45, 81 |
| 3 | | | | | -109, - 73, -37, 10, 46, 82 | -108, - 72, -36, 11, 47, 83 |
| 4 | | | | | -107, - 71, -35, 12, 48, 84 | -106, - 70, -34, 13, 49, 85 |
| 5 | | | | | -105, - 69, -33, 14, 50, 86 | -104, - 68, -32, 15, 51, 87 |
| 6 | | | | | -103, - 67, -31, 16, 52, 88 | -102, - 66, -30, 17, 53, 89 |
| 7 | | | | | -101, - 65, -29, 18, 54, 90 | -100, - 64, -28, 19, 55, 91 |
| 8 | | | | | -99, -63, -27, 20, 56, 92 | -98, -62, -26, 21, 57, 93 |
| 9 | | | | | -97, -61, -25, 22, 58, 94 | -96, -60, -24, 23, 59, 95 |
| 10 | | | | | -95, -59, -23, 24, 60, 96 | -94, -58, -22, 25, 61, 97 |
| 11 | | | | | -93, -57, -21, 26, 62, 98 | -92, -56, -20, 27, 63, 99 |
| 12 | | | | | -91, -55, -19, 28, 64, 100 | -90, -54, -18, 29, 65, 101 |
| 13 | | | | | -89, -53, -17, 30, 66, 102 | -88, -52, -16, 31, 67, 103 |
| 14 | | | | | -87, -51, -15, 32, 68, 104 | -86, -50, -14, 33, 69, 105 |
| 15 | | | | | -85, -49, -13, 34, 70, 106 | -84, -48, -12, 35, 71, 107 |
| 16 | | | | | -83, -47, -11, 36, 72, 108 | -82, -46, -10, 37, 73, 109 |
| 17 | | | | | -81, -45, -9, 38, 74, 110 | -80, -44, -8, 39, 75, 111 |
| 18 | | | | | -79, -43, -7, 40, 76, 112 | -78, -42, -6, 41, 77, 113 |
| 19-36 | Use 20MHz feedback information = 1 Subcarrier Indices -128 (Use 20 MHz FEEDBACK _ST ATUS = 1 Subcarrier Indices - 128) | Use 20MHz feedback information = 0 Subcarrier Indices -128 (Use 20 MHz FEEDBACK_ST ATUS = 0 Subcarrier Indices - 128) | Use 20MHz feedback information = 1 Subcarrier Indices + 128 (Use 20 MHz FEEDBACK _ST ATUS = 1 Subcarrier Indices + 128) | Use 20MHz feedback information = 0 Subcarrier Indices + 128 (Use 20 MHz FEEDBACK_ST ATUS = 0 Subcarrier Indices + 128) | | |
| 37-54 | Use 20MHz feedback information = 1 Subcarrier Indices + 128 (Use 20 MHz FEEDBACK _ST ATUS = 1 Subcarrier Indices + 128) | Use 20MHz feedback information = 0 Subcarrier Indices + 128 (Use 20 MHz FEEDBACK _ST ATUS = 0 Subcarrier Indices + 128) | | | | |
| 55-72 | Use 20MHz feedback information = 1 Subcarrier Indices + 384 (Use 20 MHz FEEDBACK _ST ATUS = 1 Subcarrier Indices + 384) | Use 20MHz feedback information = 0 Subcarrier Indices + 384 (Use 20 MHz FEEDBACK _ST ATUS = 0 Subcarrier Indices + 384) | | | | |
| The RU_TONE_SET_INDEX for 80+80 MHz and 160Mhz shall use the 80 MHz RU_TONE_SET_INDEX definition for the lower 80MHz and upper 80MHz. The RU_TONE_SET_INDEX with values 1-72 are mapped to the lower 80 MHz, and the RU_TONE_SET_INDEX with values 73-144 are mapped to the upper 80 MHz. (The RU_TONE_SET_INDEX for 80+80 MHz and 160 MHz shall use the 80 MHz RU_TONE_SET_INDEX definition for the lower and upper 80MHz. The RU_TONE_SET_INDEX values 1-72 are mapped to the lower 80 MHz, and the RU_TONE_SET_INDEX values 73-144 are mapped to the upper 80 MHz.) | | | | | | |

When the value of the number of spatially multiplexed users field in the NFRP trigger frame is 0, each RU_TONE_SET_INDEX corresponds to one non-AP STA (AID). When the BW is 20 MHz, for a non-AP STA using RU_TONE_SET_INDEX = 1, the feedback information FEEDBACK_STATUS = 1 corresponds to the -113th, -77th, -41st, 6th, 42nd, and 78th subcarriers in the HE-LTF having energy, and the other subcarriers having no energy; the feedback information FEEDBACK_STATUS = 0 corresponds to the -112th, -76th, -40th, 7th, 43rd, and 79th subcarriers in the HE-LTF having energy, and the other subcarriers having no energy. When the BW is 40 MHz or 80 MHz, the 20 MHz subcarrier mapping relationship is expanded by 1 and 3 times, respectively, so that more non-AP STAs (AIDs) may be mapped. The starting association identifier in the NFRP Trigger frame corresponds to the RU_TONE_SET_INDEX value 1. For example, if the starting association identifier is 6, the non-AP STA with an AID value of 6 corresponds to a RU_TONE_SET_INDEX value 1, the non-AP STA with an AID value of 7 corresponds to a RU_TONE_SET_INDEX value 2, and so on.

When the value of the number of spatially multiplexed users field in the NFRP trigger frame is 1, each RU_TONE_SET_INDEX corresponds to two non-AP STAs (AIDs), and these two non-AP STAs are distinguished by different precoding matrices that are pre-allocated. The starting association identifier in the NFRP Trigger frame corresponds to the RU_TONE_SET_INDEX value 1. For example, if the starting association identifier is 6, the two non-AP STAs with AID values of 6 and 7 correspond to the RU_TONE_SET_INDEX value 1, the two non-AP STAs with AID values of 8 and 9 correspond to RU_TONE_SET_INDEX value 2, and so on.

The following technical solutions may be used to transmit event-driven (also referred to as non-predictable or difficult to predict) low-latency (LL) traffic.

### Reserve resources for the low-latency transmission

In this technical solution, a method similar to preamble puncturing may be used to reserve resources for the low-latency transmission.

For example, in order to handle low-latency traffic without causing conflicts or interference and without waiting in another station's transmission opportunity, the following scheduling method may be used: resources are allocated under a specific condition and the resource allocation information is indicated. As shown in FIG. 7, the AP may indicate, in its operating bandwidth, whether its subchannels are punctured or non-punctured. Low-latency traffic may be scheduled to be transmitted on the punctured channel, and non-low-latency (non-LL) traffic may be scheduled to be transmitted on the non-punctured channel. That is, the determined punctured channel may be used for the transmission of the event-driven low-latency traffic, thereby avoiding conflicts with the non-low-latency traffic currently being transmitted.

### Design overlapping PPDUs to indicate low-latency traffic

When a STA has low-latency data to be transmitted, it may transmit a low-latency indication frame (represented by LL_IF). The low-latency indication frame may be transmitted in an overlapping manner with the ongoing uplink transmission.

As shown in FIG. 8, a TXOP holder is an AP, and a TXOP responder is a STA1. A trigger frame (TF) may indicate that the LL-IF can be transmitted. When the STA1 transmits a triggered-based PPDU (TB-PPDU), a STA2 transmits an LL_IF that overlaps with the TB-PPDU to preempt the TXOP. The AP, after receiving the LL_IF, may indicate STA2 to transmit low-latency data (represented by LL data in FIG. 8).

This low-latency indication frame may be designed as a simple binary phase shift keying (BPSK) sequence, which is mapped to some subcarriers currently being transmitted (such as a small RU) and some OFDM symbols during the transmission.

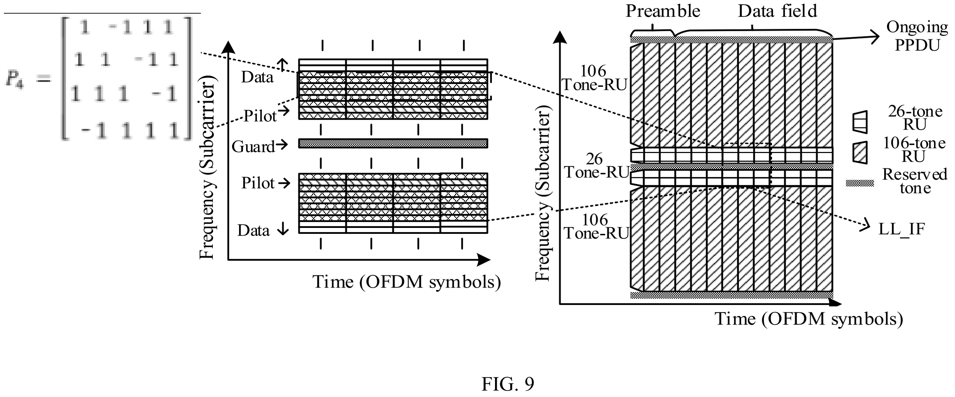

As shown in FIG. 9, for an ongoing PPDU, the frequency domain resources of the low-latency indication frame (LL-IF) may overlap with the PPDU. As shown in the right half of FIG. 9, the LL_IF partially overlaps with the 26-tone RU and reserved tones of the ongoing PPDU. The format of the low-latency indication frame may be as shown in the left half of FIG. 9. The low-latency indicator frame shown in FIG. 9 meets that: P₄ replicated 6 times; 4 OFDM symbols; 24 active subcarriers; mapped into data; and subcarriers of 26-tone RU.

### Use a smaller interframe space to transmit a preemption request

The access point divides the downlink longer PPDU into multiple shorter PPDUs and continuously transmits them with x interframe space (xIFS) (where x represents pending, for example, xIFS may be PIFS), and it is indicated in a preamble of a first short PPDU whether the transmission within a period of time (such as the current transmission duration) can be preempted (preemption). If preemption is possible, other stations with low-latency traffic to be transmitted (such as STA2 and STA3) may use an interframe space (Tp) shorter than xIFS to transmit a preemption request (PR) to the access point, thereby interrupting the downlink transmission of the access point.

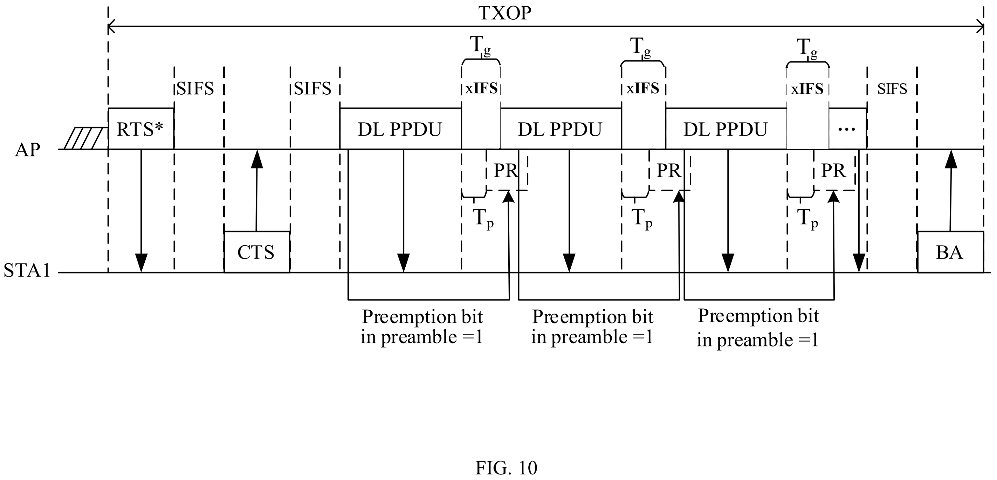

As shown in FIG. 10, the AP is the TXOP holder. The AP may divide a longer PPDU into multiple downlink PPDUs (DL PPDUs) as shown in FIG. 10, and transmit the multiple downlink PPDUs continuously with xIFS. In the preamble of the downlink PPDU, a preemption bit may be used to indicate whether the downlink transmission can be preempted. For example, when the preemption bit = 1, the STA may use the interframe space Tp (less than xFIS) to transmit the PR. If a STA has transmitted a PR, the AP's downlink transmission is interrupted; if no STA transmits a PR, the AP's downlink transmission is not interrupted.

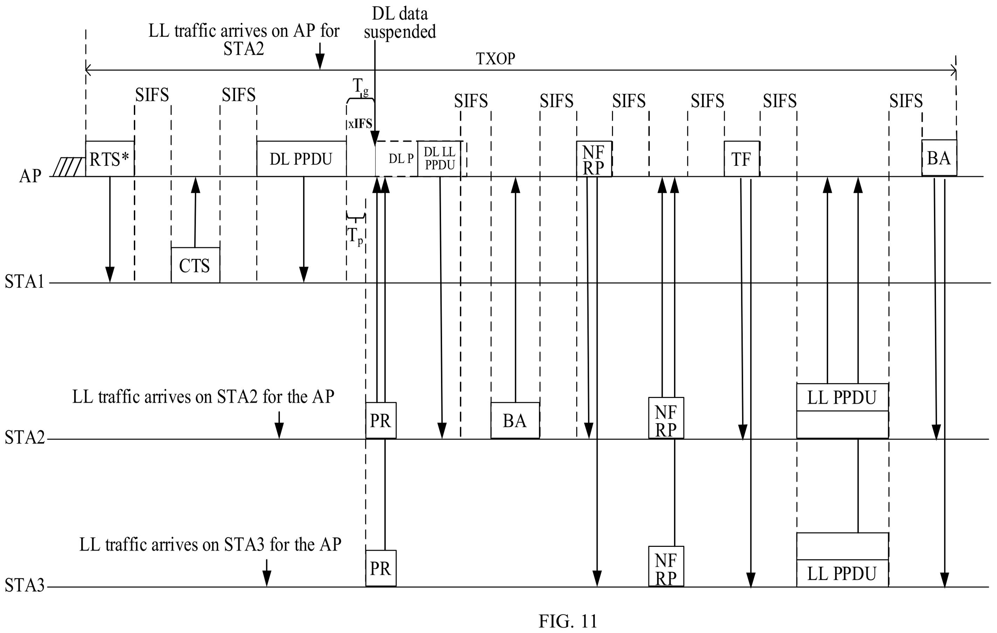

The following describes the transmission process of the preemption request by taking FIG. 11 as an example. As shown in FIG. 11, LL traffic destined for the AP arrives at both STA2 and STA3. Therefore, both STA2 and STA3 transmit PR by using Tp. Since the AP receives the PR, the AP's downlink data transmission is suspended. However, LL traffic destined for STA2 arrives at the AP. Therefore, the AP will transmit a downlink LL PPDU to STA2. After the downlink LL PPDU transmission is completed, the AP may transmit TF to STA2 and STA3, so that STA2 and STA3 may transmit their respective LL PPDUs.

In related technologies, there are many problems in the transmission of low-latency traffic.

Taking the technical solution of reserving resources for the low-latency traffic transmission as an example, since low-latency traffic is difficult to be predicted or unpredictable, it is relatively difficult to reserve resources that match with the low-latency traffic. For example, reserving too many resources may easily lead to resource waste; reserving too few resources may result in only a small number of stations being able to complete the low-latency data transmission after the UORA competition. Also, in a case where a station uses MU PPDU single-user transmission (SU transmission) in the uplink, other stations cannot predict the length of the MU PPDU, and therefore, it is difficult to align with the MU PPDU when transmitting the low-latency traffic.

Taking the technical solution involving the overlapping PPDU indicating low-latency data as an example, the overlapping PPDU may interfere with the PPDU currently being transmitted, thereby affecting the reliability of the transmission.

Taking the technical solution of using a smaller interframe space to transmit a preemption request as an example, the technical solution only solves the problem of preempting the downlink transmission of the access point, but does not solve the problem of preempting the uplink transmission of the station. Also, a transmission from other stations (such as an OBSS (Overlapping Basic Service Set) station) or other systems may occur within the xIFS duration, causing the downlink transmission of the access point to be mistakenly preempted. Also, the transmission of the preemption request increases system load and total system latency.

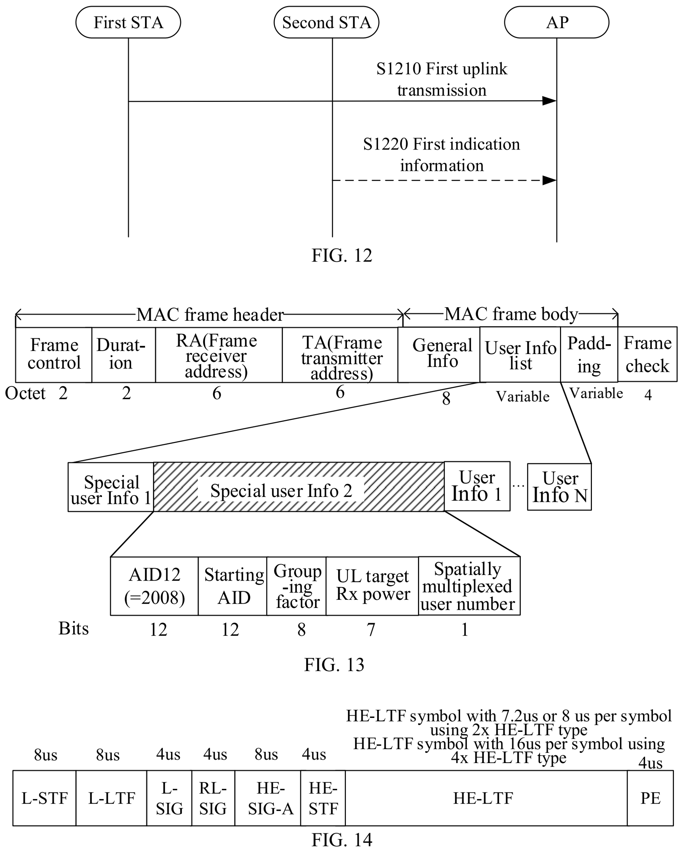

FIG. 12 is a schematic flowchart of a wireless communication method provided in the embodiments of the present disclosure, to solve the above-mentioned problems. The method shown in FIG. 12 may be performed by a first STA and an AP. The method shown in FIG. 12 may include a step S1210.

In the step S1210, the first STA transmits a first uplink transmission to the AP in a first TXOP.

The first TXOP may be acquired by the first STA or the AP. That is, a holder of the first TXOP may be the first STA or the AP. In a case where the holder of the first TXOP is the AP, the first STA may be a responder of the first TXOP.

The first uplink transmission may include a transmission of the first STA for one or more of: a data frame, a management frame, and a control frame.

In some embodiments, the first uplink transmission may be an uplink response or uplink acknowledgement for a downlink transmission (e.g., a data frame and/or a management frame) performed by the AP after acquiring the TXOP. For example, the uplink response or uplink acknowledgement may be performed via a management frame and/or an acknowledgement (Ack) frame and/or a block acknowledgement (BA) frame.

The first STA may reserve one or more frequency domain units in the first uplink transmission. One or more frequency domain units may be used by a second STA to report the first indication information. The first indication information may be used to indicate that: the second STA comprises low-latency traffic to be transmitted, and/or the second STA needs to preempt the first TXOP. The second STA may be another STA that belongs to the same network as the first STA. It can be understood that the second STA may be any STA different from the first STA. Alternatively, operations of other STAs different from the first STA in the same network may refer to the second STA.

The frequency domain unit may include an RU and/or a subchannel (e.g., a 20 MHz subchannel). In the case where the frequency domain unit is an RU, if the first STA reserves multiple RUs, the multiple RUs may be located in multiple subchannels. The multiple subchannels may be continuous or discontinuous. For example, multiple RUs may be an entire subchannel (such as a 20 MHz subchannel).

In a case where the frequency domain unit is the RU, frequency domain resources may be reserved at RU granularity, and compared with frequency domain resources being reserved at subchannel or channel granularity, the resource reservation granularity is smaller, the resource waste is smaller, and the frequency domain resources may be more fully utilized.

Low-latency traffic may refer to traffic identified by a restricted target wake time traffic identifier (R-TWT TID) or traffic identified by a stream classification service identifier (SCS ID). Low-latency traffic may be event-driven. For example, low-latency traffic may include one or more of: traffic generated by user instant messaging interaction, and traffic generated by a sensor.

Non-low-latency traffic may refer to traffic that is neither identified by an R-TWT TID nor identified by an SCS ID.

It should be noted that "low-latency traffic" is only an exemplary representation. In some embodiments, low-latency traffic may also be referred to as low-latency data, delay-sensitive data, delay-sensitive traffic, etc.

As described above, the first indication information may be used to indicate that the second STA comprises low-latency traffic to be transmitted. That is, the first indication information may be used to indicate that there is one or more STAs comprising low-latency traffic to be transmitted. Therefore, the first indication information may also be referred to as a low latency indication (LL indication).

Optionally, the method shown in FIG. 12 may further include a step S1220. The step S1220 may be performed by the second STA and the AP.

In the step S1220, the second STA reports first indication information to the AP.

Exemplarily, in a case where the second STA has a volume of low-latency traffic exceeding x, the second STA may indicate to the AP via the first indication information that the second STA comprises low-latency traffic to be transmitted, or the second STA needs to preempt the first TXOP to transmit the low-latency traffic. Here, x may be an integer greater than or equal to 0. When x is 0, and in a case where low-latency traffic arrives at the first STA, the second STA may report the first indication information.

After receiving the first indication information, the AP may allocate resources for the second STA, so that the second STA transmits low-latency traffic. The resources may include one or more of: time domain resources, frequency domain resources, and space domain resources.

The first indication information is reported on one or more frequency domain units reserved on the first uplink transmission. That is, when transmitting the first uplink transmission, the first STA may reserve one or more frequency domain units for not performing the uplink transmission. For the second STA, the first indication information may be reported on the reserved one or more frequency domain units. In other words, the first uplink transmission and the first indication information may occupy the same time domain resources, or the time domain resources occupied by the first uplink transmission may partially or completely overlap with those of the first indication information, and the frequency domain resources of the first uplink transmission may not overlap with those of the first indication information. Therefore, no interference will be generated between the first uplink transmission and the first indication information, thereby avoiding the impact of interference on transmission reliability and also reducing the total system latency.

The size of the first indication information is predictable. For example, all STAs may report the same first indication information, or a limited number of groups of STAs report different first indication information. Therefore, the resources reserved for reporting the first indication information may also be predictable or can be determined. That is, compared with reserving resources for unpredictable low-latency traffic, reserving resources for the first indication information does not involve the problem of resource waste caused by too many reserved resources or the problem of inability to complete the transmission of low-latency traffic caused by too few reserved resources.

In addition, compared with low-latency traffic, the first indication information is shorter. Therefore, the present disclosure may avoid the problem of misalignment with the MU PPDU in a case where the station uses the MU PPDU single-user transmission in the uplink.

In some embodiments, the first indication information may not be distinguished between specific STAs. In other words, the first indication information indicates that one or more STAs of a plurality of STAs associated with the AP comprise low-latency traffic to be transmitted, and/or one or more STAs of the plurality of STAs associated with the AP need to preempt the first TXOP. The plurality of STAs may report the same first indication information.

In a case where the first indication information is not distinguished between specific STAs, resource reservation may be reduced as much as possible. For example, the first STA may only reserve a subchannel with a bandwidth of 20 MHz, or a 26-tone resource unit, which may meet requirements of a plurality of STAs reporting low latency indications and/or indications of the need to preempt the TXOP.

It can be understood that in a case where the first indication information is not distinguished between specific STAs, the AP, after receiving the first indication information, may determine that other STAs other than the first STA comprise low-latency traffic to be transmitted, and/or the other STAs need to preempt the first TXOP; however, the AP cannot acquire which STA or STAs comprise low-latency traffic to be transmitted, and/or which STA or STAs need to preempt the first TXOP, according to the first indication information.

In some embodiments, after receiving the first indication information, the AP may further determine low-latency traffic information. The low-latency traffic information may include: which specific STA or STAs have low-latency traffic to be transmitted and/or the data volume of the low-latency traffic of each STA. For example, the AP may determine the buffer status of each STA through the BSR and/or NFR technologies described above, thereby determining which specific STAs have low-latency traffic to be transmitted and/or the data volume of low-latency traffic. Exemplarily, with reference to the technical solutions described above, the transmission process of low-latency traffic may be divided into three steps: a first step is that based on the first indication information, the access point determines whether there is a station having low-latency traffic to be transmitted; a second step is that the access point acquires specific low-latency traffic information; a third step is that the station transmits the low-latency traffic.

In some implementations, all stations may use the same first indication information. That is, the first indication information is used to indicate that: one or more STAs of all STAs comprise low-latency traffic to be transmitted, and/or, one or more STAs of all STAs need to preempt the first TXOP. Here, the all STAs may be all STAs associated with the AP. Alternatively, the all STAs may be all STAs belonging to the same network as the first STA. In this implementation, in a case of receiving the first indication information, the AP may determine that there is a STA of all STAs that has a transmission requirement for low-latency traffic and/or a requirement for preempting the TXOP.

For example, in a case where the AP may at one time acquire which specific STAs of all stations have low-latency traffic to be transmitted and/or the data volume of the low-latency traffic, all stations may use the same first indication information. Exemplarily, in a case where the current operation bandwidth is 80 MHz and the total number of STAs does not exceed 36, the AP may allocate at least one 26-tone resource unit to each STA in the BSRP, to acquire the buffered data volume of all stations. Therefore, in a case where the current operation bandwidth is 80 MHz and the total number of STAs does not exceed 36, all stations may use the same first indication information.

In some implementations, all STAs may be divided into one or more STA groups, and stations in the same STA group may transmit the same first indication information. For example, the one or more STA groups may include a first STA group, the first STA group may include a second STA, and the first indication information may be used to indicate: one or more STAs in the first STA group comprise low-latency traffic to be transmitted, and/or one or more STAs in the first STA group need to preempt the first TXOP. In this implementation, the AP may acquire that a STA in one or some STA groups of all STAs has a transmission requirement for low-latency traffic and/or a requirement for preempting the TXOP. Compared with the technical solution of all stations using the same first indication information, the AP may narrow the range of STAs that have the transmission requirement for low-latency traffic and/or the requirement for preempting the TXOP, according to the grouping, that is, exclude some or all STAs that do not have the transmission requirement for low-latency traffic and/or the requirement for preempting the TXOP.

For example, in a case where the AP cannot at one time acquire which specific STAs of all stations have low-latency traffic to be transmitted and/or the data volume of the low-latency traffic, the first indication information may be transmitted by means of a STA group. Exemplarily, in a case where the current operation bandwidth is 80 MHz and the total number of STAs exceeds 36, all stations may be grouped, and STAs in the same STA group may use the same first indication information.

It can be understood that the technical solution of all stations using the same the first indication information, has a relatively simple implementation process. The technical solution of indicating the first indication information by means of grouping, may exclude some or all STAs that do not have the transmission requirement for low-latency traffic and/or the requirement for preempting the TXOP, thereby reducing the number of STAs that the AP needs to acquire their buffered data, thereby reducing transmission overhead when the AP acquires STAs' buffered data, and reducing the transmission load.

In a case where multiple STAs are divided into one or more STA groups, the AP may indicate a grouping situation.

In some embodiments, the grouping situation may be indicated by a first trigger frame. For example, the AP may transmit the first trigger frame to the first STA and/or the second STA to inform the first STA and/or the second STA of the grouping situation.

In some embodiments, the access point may pre-notify the grouping situation. For example, the access point may notify the grouping situation in a beacon frame and/or in a newly defined action frame.

The grouping situation may include one or more of the following information: the number of STAs in the first STA group, the number of one or more STA groups, and a minimum association identifier of multiple STAs. The number of STAs in the first STA group may also be indicated by the number of STAs belonging to the same STA group. The number of one or more STA groups may be the total number of groups. The total number of groups may be indicated by the modulus of the groups.

The first trigger frame may include a first field. The first field may be used to indicate the number of STAs in the first STA group and/or the number of one or more STA groups. In some embodiments, the first field may further be included in a beacon frame and/or a newly defined action frame.

The first trigger frame may include a second field. The second field may be used to indicate a minimum association identifier of multiple STAs. In some embodiments, the second field may also be included in a beacon frame and/or a newly defined action frame.

Both the first field and the second field may belong to a third field. The third field may be a newly added field in the first trigger frame. For example, the third field may be a special user information 2 field.

FIG. 13 is a schematic diagram of a first trigger frame format provided in the embodiments of the present disclosure. In FIG. 13, in the present disclosure, a special user information 2 field marked by gray filling is added.

In FIG. 13, the first field is a grouping factor field (grouping factor), the second field is a starting association identifier (Starting AID) field, and the third field is a special user information 2 field.

The starting association identifier field may indicate a minimum association identifier value in preemption stations that may participate in this transmission opportunity (i.e., the first TXOP).

The grouping factor field may indicate the number of stations belonging to the same group, or the grouping modulus.

Taking the example where the grouping factor field indicates the number of stations belonging to the same group, the number of stations in the same group may be the value of the grouping factor + 1. In this case, the number of stations included in one of the groups (e.g., the last group) may be less than the number indicated by the grouping factor. For example, in a case where the starting association identifier is 3, if the grouping factor is 0, there is only one station in the same group (i.e., each of the STAs with identifiers 3, 4, 5, etc., forms a group). For another example, in a case where the starting association identifier is 3, if the grouping factor is 1, there are two stations in the same group (i.e., STAs with identifiers 3 and 4 form a group, STAs with identifiers 5 and 6 form a group, etc.), and so on.

Taking the grouping factor field indicating the grouping modulus (or the total number of groups) as an example, for example, stations whose difference between the association identifier and the starting association identifier is congruent modulo the modulus, may be in the same group. In this case, the number of stations in each group may not be consistent. For example, in a case where the starting association identifier is 3, if the grouping modulus is 7, for example, 3, 10, 17, etc., belong to a group, and 4, 11, 18, etc., belong to a group.

A uplink target received power (UL Target Receive Power) field may be used to indicate the received power that the access point expects to be measured when receiving the first indication information.

A number of spatially multiplexed users field may be used to indicate on how many streams the first indication information is transmitted. For example, 0 indicates one stream and 1 indicates two streams. When two streams are indicated, the station may determine on which stream to transmit the first indication information according to the difference between its own association identifier and the starting association identifier. For example, if the starting association identifier is 3, and the station's association identifier is 3, then the first indication information is transmitted on the first stream; if the station's association identifier is 4, then it is transmitted on the second stream; if the station's association identifier is 5, then the first indication information is transmitted on the first stream; if the station's association identifier is 6, then the first indication information is transmitted on the second stream, and so on.

The following introduces a method for reporting the first indication information.

In some embodiments, the first indication information may be reported via an NDP. For example, when the reserved one or more frequency domain units are one or more 20 MHz subchannels, the first indication information may be reported through the NDP.

In some embodiments, the first indication information may be reported via a high efficiency trigger based feedback null data physical protocol data unit (high efficiency trigger based NDP, HE TB feedback NDP).

When the first indication information is reported by using the HE TB feedback NDP, the HE-LTF field may be mapped with RU_TONE_SET_INDEX, so that one RU_TONE_SET_INDEX may correspond to one STA group or one STA. In the mapping of the related art, each AID corresponds to a group of subcarriers when the feedback information (FEEDBACK_STATUS) is the value 0, and corresponds to another group of subcarriers when the feedback information (FEEDBACK_STATUS) is the value 1. In the present disclosure, a station without low-latency traffic may not need to transmit the NDP, that is, it does not need to use the value 0 of the feedback information (FEEDBACK_STATUS). Therefore, the corresponding subcarrier may be used for the value 1 of the feedback information (FEEDBACK_STATUS) corresponding to other AIDs.

For example, if the starting association identifier is 6, as described above, the subcarrier groups {-113, -77, -41, 6, 42, 78} and {-112, -76, -40, 7, 43, 79} in the 20 MHz bandwidth in the NFR correspond to the value 1 and the value 0 of the feedback information of the station with the AID 6, respectively.

For another example, in this solution, if one station is one STA group, it is amended to that { - 113, - 77, - 41, 6, 42, 78} and { - 112, - 76, - 40, 7, 43, 79} correspond to the value 1 of the feedback information of the stations with the AID 6 and the AID 7, respectively, and so on.

For another example, in this solution, if two stations form one STA group, it is amended to that { - 113, - 77, - 41, 6, 42, 78} and { - 112, - 76, - 40, 7, 43, 79} correspond to the value 1 of the feedback information of stations of two groups of stations (e.g., AIDs 6, 7, 8, and 9 form one STA group, and AIDs 10, 11, 12, and 13 form another STA group), respectively, and so on.

It should be noted that, in a case where all stations transmit the same first indication information, the NDP for reporting the first indication information may include not only the HE TB feedback NDP. The first indication information may be reported via one or more of the following NDPs: a high efficiency sounding null data physical protocol data unit (high efficiency sounding NDP, HE sounding NDP), an extremely high throughput sounding null data physical protocol data unit (extremely high throughput sounding NDP, EHT sounding NDP), and an ultra high reliability sounding null data physical protocol data unit (ultra high reliability sounding NDP, UHR sounding NDP). That is, the LTF field does not need to be mapped with the RU_TONE_SET_INDEX described above. The LTF field may include one or more of: an HE-LTF field, an EHT-LTF field and a UHR-LTF field.

FIG. 14 is an example diagram of an HE sounding NDP format. As shown in FIG. 14, the HE sounding NDP may include a legacy short training field (L-STF), a legacy long training field (L-LTF), a legacy signal field (L-SIG), a repeated legacy signal (RL-SIG), an uplink high efficiency-SINGAL field-A (HE-SIG-A), a high efficiency short training field (HE-STF), a high efficiency long training field (HE-LTF), and a packet extension (PE).

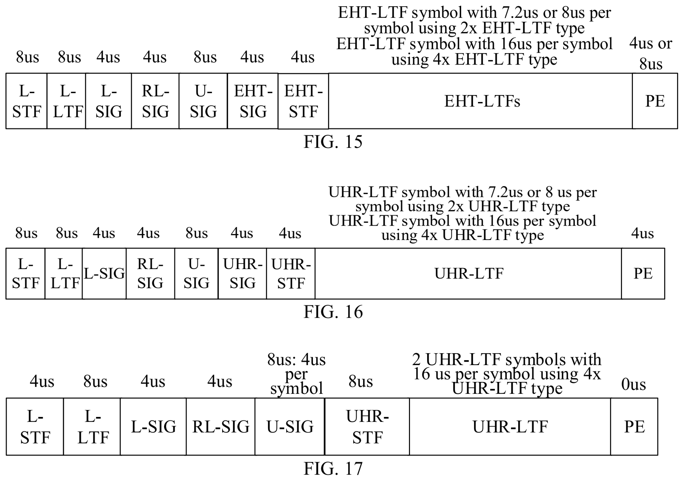

FIG. 15 is an example diagram of an EHT sounding NDP format. As shown in FIG. 15, the EHT sounding NDP may include: a legacy short training field (L-STF), a legacy long training field (L-LTF), a legacy signal field (L-SIG), a repeated legacy signal (RL-SIG), a universal signal field (U-SIG), an extremely high throughput signal field (EHT-SIG), an extremely high throughput short training field (EHT-STF), extremely high throughput long training fields (EHT-LTFs), and a packet extension (PE).

FIG. 16 is an example diagram of a possible UHR sounding NDP format. As shown in FIG. 16, the UHR sounding NDP may include: a legacy short training field (L-STF), a legacy long training field (L-LTF), a legacy signal field (L-SIG), a repeated legacy signal (RL-SIG), a universal signal field (U-SIG), an ultra high reliability signal field (UHR-SIG), an ultra high reliability short training field (UHR-STF), ultra high reliability long training fields (UHR-LTFs), and a packet extension (PE).

It should be noted that FIG. 14 to FIG. 16 are only examples. The corresponding NDP format may include some or all of the fields shown in the figures, or the NDP may further include other fields.

In some embodiments, the first indication information may be transmitted via a second-type PPDU. For example, the first indication information may be carried in an LTF field in a preamble of the second-type PPDU. The second-type PPDU may be a newly defined PPDU.

FIG. 17 is a schematic diagram of a second-type PPDU format provided in the embodiments of the present disclosure. As shown in FIG. 17, the second-type PPDU includes the following fields: a legacy short training field (non-ht short training field, L-STF), a legacy long training field (L-LTF), a legacy signal field (L-SIG), a repeated legacy signal (RL-SIG), a universal signal field (U-SIG), an ultra high reliability short training field (UHR-STF), an ultra high reliability long training field, and a packet extension (PE).

In FIG. 17, the UHR-LTF field includes 2 UHR-LTF symbols with 16 µs per symbol using 4x UHR-LTF type (2 UHR-LTF symbols with 16 µs per symbol using 4x UHR-LTF). The duration of a symbol using 4x HE-LTF type is 12.8 microseconds (the duration excludes the guard interval), and the guard interval (GI) used is 3.2 microseconds. The PE field duration is 0 microseconds (µs).

The present disclosure further defines the subcarrier mapping of RU_TONE_SET_INDEX in the UHR-LTF field. The subcarrier mapping of RU_TONE_SET_INDEX may be as shown in Table 4.

**Table 4**

| RU_TO NE_SE T_IND EX | 26-tone RU | 52-tone RU | 106-tone RU |
|---|---|---|---|
| | There is a subcarrier group corresponding to the value 1 of feedback information, and S represents a smallest subcarrier number in the RU | There is a subcarrier group corresponding to the value 1 of feedback information, and S represents a smallest subcarrier number in the RU | There is a subcarrier group corresponding to the value 1 of feedback information, and S represents a smallest subcarrier number in the RU |
| 1 | S + 1, S + 5, S + 9, S + 13, S + 17, S + 21 | Same as 26-tone RU | Same as 26-tone RU |
| 2 | S + 2, S + 6, S + 10, S + 14, S + 18, S + 22 | | |
| 3 | S + 3, S + 7, S + 11, S + 15, S + 19, S + 23 | | |
| 4 | S + 4, S + 8, S + 12, S + 16, S + 20, S + 24 | | |
| 5 to 8 | none | The subcarrier numbers of the 26-tone RU are increased by 26, respectively | Same as 52-tone RU |
| 9 to 12 | none | None | The subcarrier numbers of the 26-tone RU are increased by 52, respectively |

It should be noted that Table 4 is only an example. The subcarrier mapping of each RU_TONE_SET_INDEX represented in Table 4 may be implemented separately. That is, Table 4 may be split and used.

It should be noted that the subcarrier mapping of RU_TONE_SET_INDEX may also be one RU_TONE_SET_INDEX corresponding to every 5 or every 4 subcarriers, which may increase the number of stations that can participate in the feedback each time.

It should be noted that the mapping may further be performed on the 52-tone RU and/or 106-tone RU in a design different from that of the 26-tone RU, so that each group of 6 subcarriers is evenly distributed in the entire 52-tone RU and/or 106-tone RU. For example, in the 52-tone RU, the subcarrier group corresponding to the value 1 of the feedback information when RU_TONE_SET_INDEX is 1, may be {S + 1, S + 9, S + 17, S + 25, S + 33, S + 41}.

In addition, one RU_TONE_SET_INDEX may also correspond to one STA group.

In particular, if all stations transmit the same first indication information, the above-mentioned RU_TONE_SET_INDEX mapping may not be performed on the UHR-LTF field of the second-type PPDU. For example, it may be pre-specified that the mapping is not performed, or the access point may pre-indicate or notify that the mapping is not performed.

In some embodiments, the one or more frequency domain units reserved by the first STA may be located in the preamble of the PPDU. Exemplarily, the first uplink transmission may be transmitted via a first-type PPDU. The LTF field in the preamble of the first-type PPDU is not uplink transmitted in the reserved one or more frequency domain units. The first-type PPDU may be a newly defined PPDU. That is, the first STA may transmit the first uplink transmission via the first-type PPDU and reserve one or more frequency domain units in the preamble.

It can be understood that the second-type PPDU may correspond to the first-type PPDU. That is, in a case where the first STA transmits the first uplink transmission via the first-type PPDU, the second STA may report the first indication information via the second-type PPDU.

The above describes the implementation in which the first indication information is carried in the preamble. The following describes an implementation in which the first indication information is carried in a data field of a third-type PPDU.

In some embodiments, the first indication information may be carried in one or more LTF symbols in the data field. For example, when one or more frequency domain units are a smaller RU, the first indication information may be carried in one or more LTF symbols in the data field. The third-type PPDU may be a newly defined PPDU. One or more LTF symbols are transmitted in the data field of the third-type PPDU. In this case, the PPDU carrying the first uplink transmission (e.g., a TB PPDU triggered by a trigger frame) may use an existing format.

The number of LTF symbols transmitted in the data field of the third-type PPDU may be predefined. For example, in the case of the uplink transmission based on a non-triggered frame, the number of LTF symbols may be one.

The number of LTF symbols transmitted in the data field of the third-type PPDU may be indicated. For example, in the case of the uplink transmission based on a trigger frame, the number of LTF symbols may be indicated by the trigger frame.

In some implementations, RU_TONE_SET_INDEX mapping may be performed on the LTF symbols of the data field. The RU_TONE_SET_INDEX mapping of the LTF symbols may be shown in Table 4.

In some implementations, RU_TONE_SET_INDEX mapping may not be performed on the LTF symbols of the data field. For example, in a case where all stations transmit the same first indication information, RU_TONE_SET_INDEX mapping may not be performed on the LTF symbols of the data field. Exemplarily, it may be pre-specified that the mapping is not performed, or the access point may pre-indicate or notify that the mapping is not performed.

In some embodiments, the first indication information may be reported via a CTS (clear-to-send) frame carried in the data field of a PPDU. For example, when the reserved one or more frequency domain units are one or more 20 MHz subchannels or a smaller RU, the first indication information may be reported via a CTS frame carried by the data field of a PPDU. In this case, the PPDU carrying the first uplink transmission (e.g., a TB PPDU triggered by a trigger frame) may use an existing format.

It should be noted that since the CTS frame (with a length of 14 octets, i.e., 112 bits) is one of the shortest frames, it may be specified that when it is used to carry the first indication information, a specific transmission rate and/or a specific modulation and coding scheme (MCS) is used for the transmission, so that the frame can be transmitted completely within one PPDU symbol, thereby solving the problem of the PPDU end misalignment that may occur in the solution for reserving time domain units. The specific MCS may be, for example, 16-QAM or 64-QAM. This is because an uplink PPDU carrying a data frame or a management frame of the station includes at least one PPDU symbol. Even if an uplink PPDU carrying the first uplink transmission of the first STA only includes one PPDU symbol, the CTS frame can be transmitted completely in one PPDU symbol, based on the present disclosure, thereby avoiding the problem of PPDU end misalignment caused by the complete transmission of the PPDU of the first uplink transmission but the incomplete transmission of the CTS frame.

It should be noted that the specific transmission rate and/or specific MCS may meet: pre-defined, pre-notified, or indicated through a trigger frame.

The pre-notified may be pre-notified by the AP. For example, the AP may notify in a beacon frame and/or a newly defined action frame. Exemplarily, the AP may notify a specific transmission rate and/or a specific MCS in a beacon frame and/or a newly defined action frame.

When the present disclosure is applied to the uplink transmission based on a trigger frame, the AP may indicate a specific transmission rate and/or a specific MCS through the trigger frame.

When the first indication information is carried in the data field of a PPDU, scrambler seeds of data fields of different PPDUs transmitted by different STAs need to be consistent, so as to ensure that the PPDU symbols transmitted by each STA are consistent, thereby achieving successful parsing of the data field.

The scrambler seed may meet one or more of: predefined, pre-notified, or indicated by a trigger frame. For example, the AP may notify the scrambler seed in a beacon frame and/or a newly defined action frame. For another example, when the present disclosure is applied to the uplink transmission based on a trigger frame, the AP may indicate the scrambler seed through the trigger frame.

It should be noted that the technical solution of reporting the first indication information through the CTS frame carried by the data field may only be applicable to a case where all STAs transmit the same first indication information.

The following describes how to determine or indicate one or more frequency domain units reserved in the first uplink transmission.

The one or more frequency domain units reserved by the first STA in the first uplink transmission may be indicated by reservation resource information. The reservation resource information not only needs to be known by the first STA to reserve resources, but also needs to be known by other STAs (e.g., the second STA) except the first STA, to report the first indication information. Therefore, the reservation resource information may meet: specified by a protocol, configured by the access point, configured by a physical AP MLD to which the access point belongs, or configured by a virtual AP MLD to which the AP belongs. The configuration may include semi-static configuration or dynamic configuration.

For example, the access point may indicate the reservation resource information in a beacon frame. For another example, the access point may indicate the reservation resource information when enabling the delay-sensitive transmission priority mode. For another example, the access point may indicate the reservation resource information in a trigger frame. The following is described by taking the trigger frame indicating the reservation resource information as an example.

In some embodiments, before the first STA performs the first uplink transmission, the first STA may receive a second trigger frame transmitted by the AP. The second trigger frame may be related to the reservation resource information.

The second trigger frame may include a fourth field. The fourth field may be used to indicate the first STA to reserve a frequency domain unit for reporting the first indication information in at least one uplink transmission, where the at least one uplink transmission includes the first uplink transmission. Alternatively, the fourth field may be used to indicate the first STA to reserve a frequency domain unit for reporting the first indication information in an uplink transmission in the first TXOP.

In some embodiments, the first TXOP is a TXOP acquired by the first STA. That is, the fourth field is used to indicate the first STA to reserve a frequency domain unit for reporting the first indication information in an uplink transmission in the TXOP acquired by the first STA.

In some embodiments, the first TXOP is a TXOP acquired by the AP. That is, the fourth field is used to indicate the first STA to reserve a frequency domain unit for reporting the first indication information in an uplink transmission in the TXOP acquired by the AP.

In some embodiments, the at least one uplink transmission may be indicated by the AP through other fields in the second trigger frame, or the at least one uplink transmission may be indicated by the AP through other frames, or the at least one uplink transmission may be indicated by the AP through the fourth field.

In some embodiments, the first TXOP may be indicated by the AP through other fields in the second trigger frame, or the first TXOP may be indicated by the AP through other frames, or the first TXOP may be indicated by the AP through the fourth field.

In some embodiments, the fourth field may occupy one bit. For example, a value 0 of the bit may indicate the first STA to reserve a frequency domain unit for reporting the first indication information in at least one uplink transmission. For another example, a value 0 of the bit may indicate the first STA to reserve a frequency domain unit for reporting the first indication information in an uplink transmission in the first TXOP. For another example, a value 1 of the bit may indicate the first STA to reserve a frequency domain unit for reporting the first indication information in at least one uplink transmission. For another example, a value 1 of the bit may indicate the first STA to reserve a frequency domain unit for reporting the first indication information in an uplink transmission in the first TXOP.

In some embodiments, the fourth field may be located in a general information field in the second trigger frame. For example, the AP may use a reserved bit in the general information field in the second trigger frame as the fourth field, to indicate the STA triggered by the second trigger frame to reserve a frequency domain unit (such as a subchannel or resource unit) for reporting the first indication information in the uplink transmission. The specific frequency domain unit (such as subchannel or resource unit) information has been set in advance.

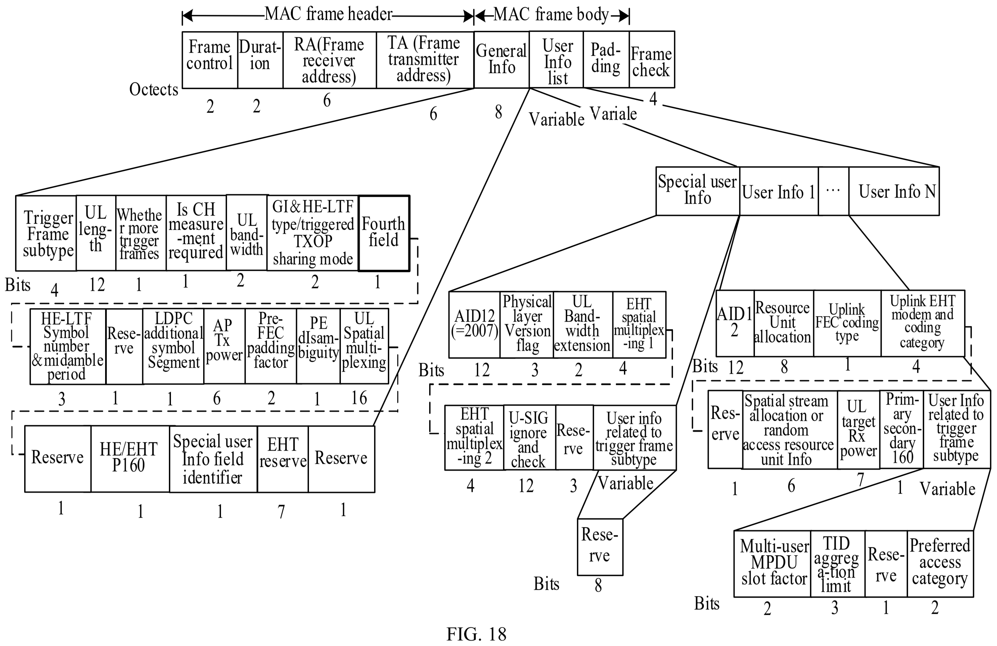

For example, the second trigger frame may be as shown in FIG. 18, where in the general information field, the fourth field (represented by a bold box) is located after the GI and HE-LTF type/triggered transmission opportunity sharing mode field, and the fourth field is located before the number of HE-LTF symbols and midamble period field.

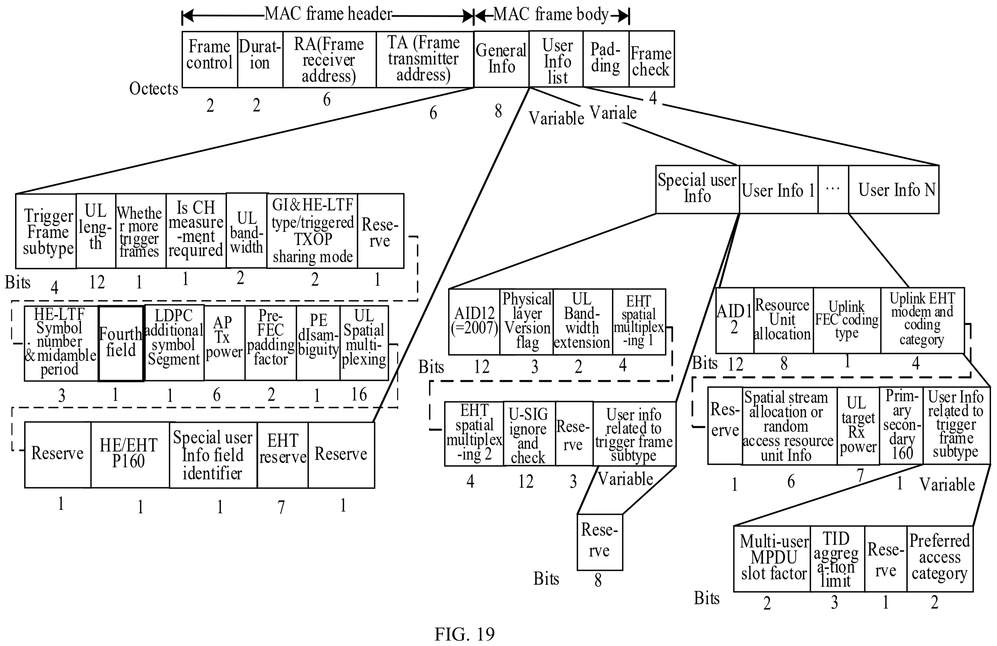

For another example, the second trigger frame may be as shown in FIG. 19, where in the general information field, the fourth field (represented by a bold box) is located after the number of HE-LTF symbols and midamble period field, and the fourth field is located before the LDPC additional symbol segmentation field.

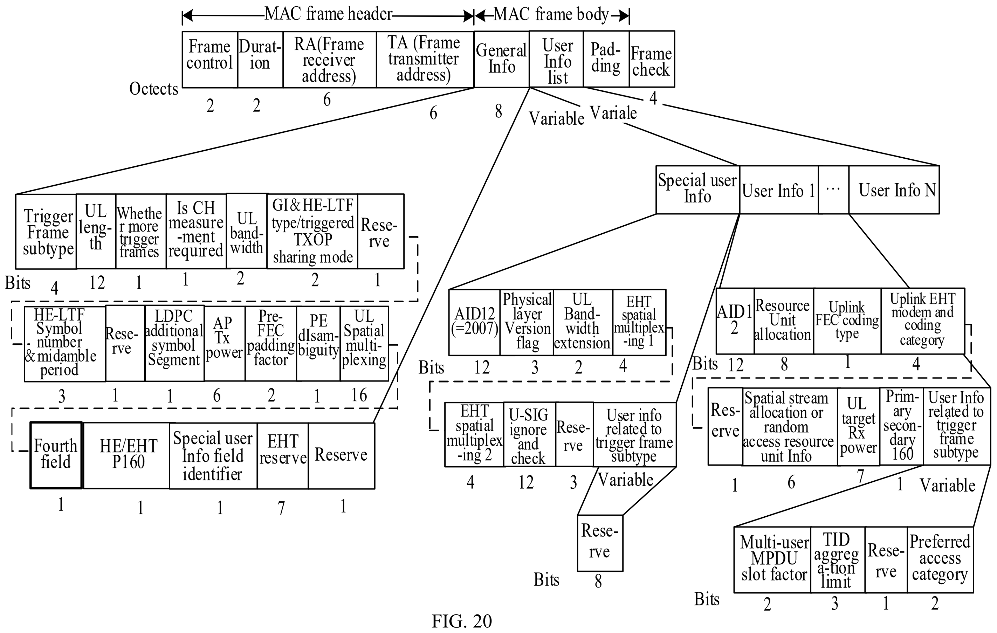

For another example, the second trigger frame may be as shown in FIG. 20, where in the general information field, the fourth field (represented by a bold box) is located after the uplink spatial multiplexing field, and the fourth field is located before the HE/EHT P160 field.

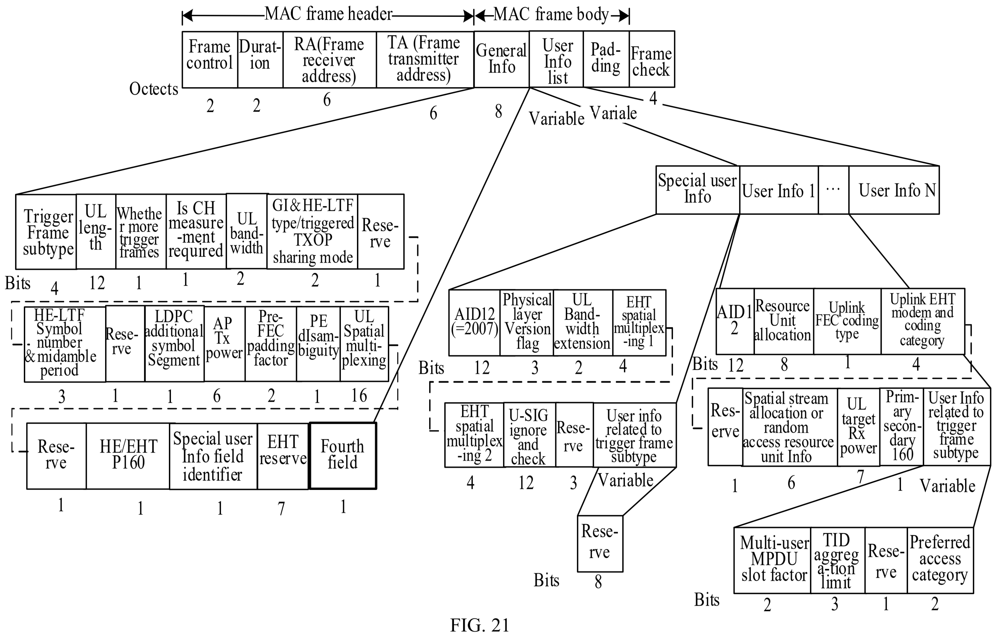

For another example, the second trigger frame may be as shown in FIG. 21, where in the general information field, the fourth field (represented by a bold box) is located after the EHT reservation field.

As shown in FIG. 18 to FIG. 21, the general information field in the second trigger frame further includes the following fields: trigger frame type (occupying 4 bits), uplink length (occupying 12 bits), whether there are more trigger frames (occupying 1 bit), whether channel measurement is required (occupying 1 bit), uplink bandwidth (occupying 2 bits), guard interval (GI) and high efficiency long training field (HE-LTF) type/triggered transmission opportunity sharing mode (occupying 2 bits), number of HE-LTF symbols and midamble period (occupying 3 bits), low-density parity check (LDPC) additional symbol segmentation (occupying 1 bit), AP transmission power (occupying 6 bits), pre-forward error correction (Pre-FEC) padding factor (occupying 2 bits), packet extension (PE) disambiguation (occupying 1 bit), uplink spatial multiplexing (occupying 16 bits), HE/EHT P160 (occupying 1 bit), special user information field identifier (occupying 1 bit), and EHT reservation (occupying 7 bits).

In some embodiments, the second trigger frame further includes a fifth field; where the fifth field is used to indicate frequency domain unit information for reporting the first indication information, reserved by the first STA.

For example, the AP may use four reserved bits in the second trigger frame (such as four reserved bits in the special user information field) as the fifth field, to indicate the reserved frequency domain unit (such as subchannel) number. In the operation bandwidth of the current BSS, the subchannels are numbered in ascending order of center frequency, or the subchannels are numbered in descending order of center frequency, or the subchannels are numbered in other predefined ways. Specifically, a subchannel corresponding to the main channel cannot be used as the reserved subchannel.

For another example, the AP may use the eight reserved bits in the special user information field (the value of its AID12 field is the special value 2007) in the second trigger frame as the fifth field, to indicate the reserved resource unit (RU). The mode for numbering resource units is consistent with the mode used in the resource unit allocation field.

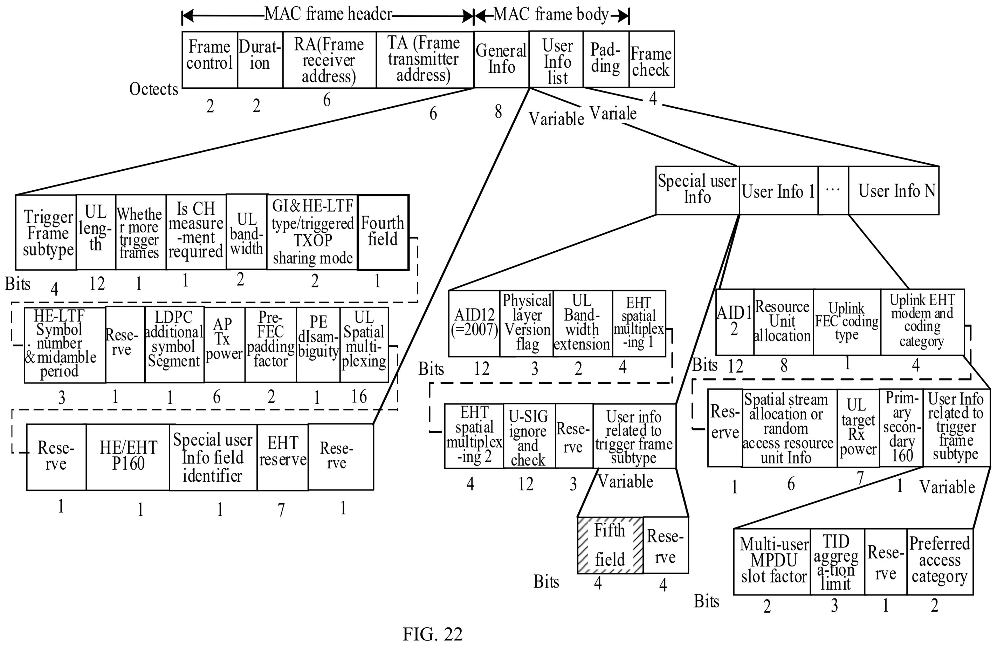

Specifically, for example, the second trigger frame may be as shown in FIG. 22, where in the general information field, the fourth field (represented by a bold box) is located after the GI and HE-LTF type/triggered transmission opportunity sharing mode field, and the fourth field is located before the number of HE-LTF symbols and midamble period field; and in the special user information field in the user information list, the fifth field (occupying 4 bits) (represented by a light gray box) may be located in the user information field related to the trigger frame subtype.

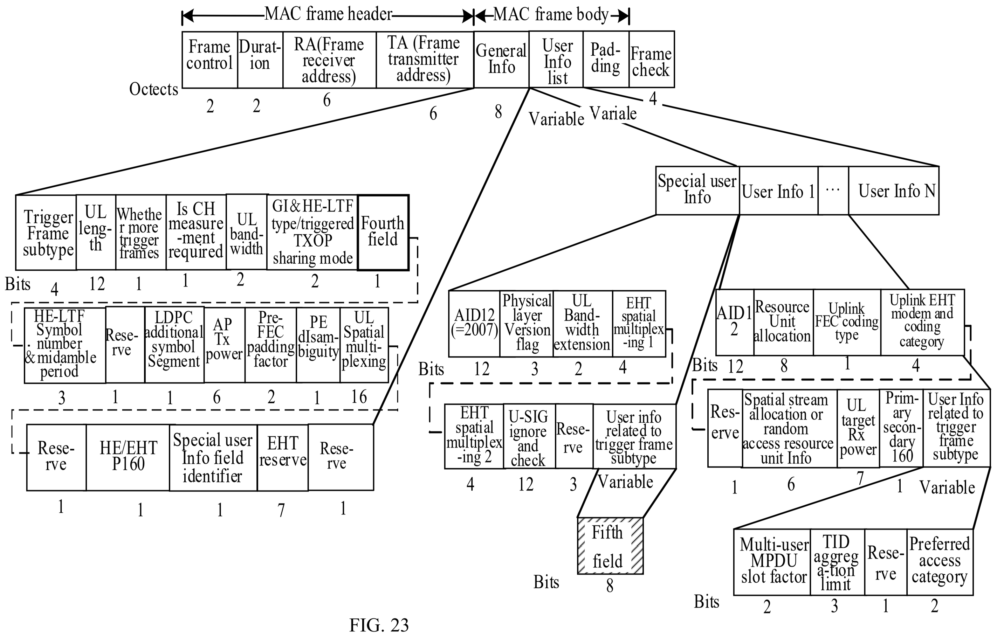

Specifically, for example, the second trigger frame may be as shown in FIG. 23, where in the general information field, the fourth field (represented by a bold box) is located after the GI and HE-LTF type/triggered transmission opportunity sharing mode field, and the fourth field is located before the number of HE-LTF symbols and midamble period field; and in the special user information field in the user information list, the fifth field (occupying 8 bits) (represented by a light gray box) may be located in the user information field related to the trigger frame subtype.

As shown in FIG. 22 and FIG. 23, the special user information field in the second trigger frame further includes the following fields: AID12 (=2007), physical layer version flag, uplink bandwidth extension, EHT spatial multiplexing 1, EHT spatial multiplexing 2, user signal (U-SIG) ignore and check, and user information related to the trigger frame subtype.

As shown in FIG. 18 to FIG. 23, the user information field in the second trigger frame includes the following fields: AID12, resource unit allocation, uplink forward error correction (FEC) coding type, uplink EHT modem and coding category, spatial stream allocation or random access resource unit information, uplink target received power, primary and secondary 160, and user information related to the trigger frame subtype. The user information fields related to the trigger frame subtype include the following fields: multi-user medium access control protocol data unit (MPDU) slot factor, TID aggregation limit, and preferred access category.

In some embodiments, the second trigger frame further includes a sixth field; where the sixth field is used to indicate parameter information for the other STAs to perform null data physical protocol data unit (NDP) feedback.

In some embodiments, the parameter information for the NDP feedback includes but is not limited to at least one of: an association identifier (AID), a starting AID, a feedback type, an uplink target received power, and a number of spatially multiplexed users.

It should be noted that the first trigger frame and the second trigger frame may be the same or different trigger frames.

In some embodiments, if the second STA reports the first indication information on the reserved one or more frequency domain units, the AP may transmit preemption indication information to the first STA. The preemption indication information is used to indicate that the AP will preempt the first TXOP.

In some embodiments, the preemption indication information is carried by a block acknowledgement frame corresponding to the first uplink transmission, or the preemption indication information is carried by a management frame.

In some embodiments, in a case where the preemption indication information is carried by the block acknowledgement frame corresponding to the first uplink transmission, the block acknowledgement control (BA Control) field in the block acknowledgement frame corresponding to the first uplink transmission includes a field for indicating that the AP will preempt the first TXOP.

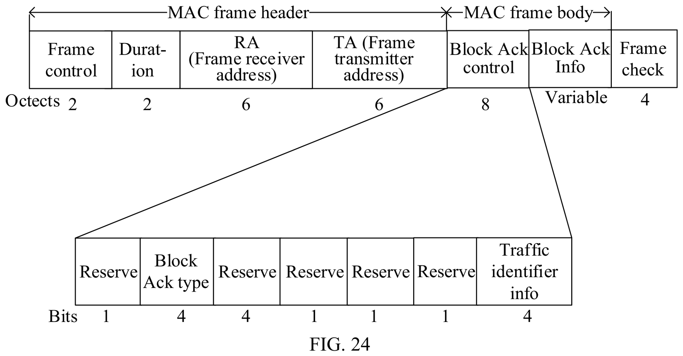

Specifically, for example, as shown in FIG. 24, the AP uses a reserved bit in the block acknowledgement control (BA Control) field of the block acknowledgement frame to indicate the field that the AP will preempt the first TXOP.

In some embodiments, other STAs (such as the second STA), after knowing that the first STA or the AP has enabled the delay-sensitive transmission priority mode (also referred to as a low-latency transmission priority mode), may determine that the first STA has reserved one or more frequency domain units for reporting the first indication information in the first uplink transmission.

For example, other STAs (such as the second STA), after knowing that the first STA or the AP has enabled the delay-sensitive transmission priority mode, may determine that the first STA has reserved a frequency domain unit for reporting the first indication information in at least one uplink transmission, and the at least one uplink transmission includes the first uplink transmission.

For another example, other STAs (such as the second STA), after knowing that the first STA or the AP has enabled the delay-sensitive transmission priority mode, may determine that the first STA has reserved a frequency domain unit for reporting the first indication information in an uplink transmission in the first TXOP.

In some embodiments, in a case where the first STA enables the delay-sensitive transmission priority mode, other STAs (such as the second STA) may acquire that the first STA has enabled the delay-sensitive transmission priority mode, through a beacon frame and/or management frame transmitted by the AP.

For example, the first STA may switch modes in advance (i.e., enable the delay-sensitive transmission priority mode), and the AP broadcasts in the beacon frame that the first STA has enabled the delay-sensitive transmission priority mode (the mode switch of the first STA takes effect after at least one beacon frame transmission). The reserved one or more frequency domain units may be predefined, or indicated in the beacon frame. After the first STA enables the delay-sensitive transmission priority mode, it reserves a frequency domain unit for reporting the first indication information in at least one uplink transmission, or reserves a frequency domain unit for reporting the first indication information in an uplink transmission in the first TXOP.

For another example, the first STA switches the mode in advance (i.e., enables the delay-sensitive transmission priority mode), and the AP transmits a newly defined management frame for broadcast to notify that the first STA has enabled the delay-sensitive transmission priority mode. The reserved one or more frequency domain units may be predefined, or indicated in a newly defined management frame. After the first STA enables the delay-sensitive transmission priority mode, it reserves a frequency domain unit for reporting the first indication information in at least one uplink transmission, or reserves a frequency domain unit for reporting the first indication information in an uplink transmission in the first TXOP.

In some embodiments, the delay-sensitive transmission priority mode corresponding to the first STA is enabled based on a request from the AP, or the delay-sensitive transmission priority mode corresponding to the first STA is enabled by the first STA and notified to the AP.

In some embodiments, in a case where the delay-sensitive transmission priority mode corresponding to the first STA is enabled based on a request from the AP, the enabling duration of the delay-sensitive transmission priority mode corresponding to the first STA is configured by the AP in the request information, and/or the one or more frequency domain units are configured by the AP in the request information.

For example, the AP may transmit a management frame to at least one STA to request to enable the delay-sensitive transmission priority mode, and optionally, the management frame may further indicate the following information: the enabling duration of the delay-sensitive transmission priority mode, and/or the reserved specific frequency domain unit (i.e., one or more frequency domain units). In a case where the delay-sensitive transmission priority mode is enabled, the STA may reserve frequency domain units (subchannels or RUs) for other STAs to report the first indication information to the AP when performing the uplink transmission in the TXOP acquired by itself, and the AP may preempt transmission time in the TXOP acquired by the at least one STA for the uplink and/or downlink delay-sensitive data transmission with other STAs. Specifically, for example, the AP may further transmit a management frame to the at least one STA to request to disable the delay-sensitive transmission priority mode.

In some embodiments, in a case where the delay-sensitive transmission priority mode corresponding to the first STA is enabled by the first STA and notified to the AP, the enabling duration of the delay-sensitive transmission priority mode corresponding to the first STA is indicated by the first STA in the notification information, and/or the one or more frequency domain units are configured by the first STA in the notification information, and/or the one or more frequency domain units are configured by the AP in the notification response.

For example, the STA may transmit a management frame to the AP to notify that the delay-sensitive transmission priority mode is enabled. Optionally, the management frame may further indicate the following information: the enabling duration of the delay-sensitive transmission priority mode, and/or the reserved specific frequency domain unit (i.e., one or more frequency domain units reserved for other STAs to report the first indication information); the AP responds with a management frame, which may further confirm or indicate the modification of the reserved specific frequency domain unit (i.e., one or more frequency domain units). In a case where the delay-sensitive transmission priority mode is enabled, the STA may reserve frequency domain units (subchannels or RUs) for other STAs to report the first indication information to the AP when performing the uplink transmission in the TXOP acquired by itself, and the AP may preempt the transmission time in the TXOP acquired by the at least one STA for the uplink and/or downlink delay-sensitive data transmission with other STAs. Specifically, for example, the STA may further transmit a management frame to the AP to notify that the delay-sensitive transmission priority mode is disabled.

In some embodiments, in a case where the AP enables the delay-sensitive transmission priority mode, other STAs (such as the second STA) acquire that the AP has enabled the delay-sensitive transmission priority mode, through at least one of the following frames transmitted by the AP: a beacon frame, a probe response frame, an association response frame, a reassociation response frame, an operation mode notification frame, and a newly defined management frame.

In some embodiments, the AP indicates at least one of the following when indicating that the delay-sensitive transmission priority mode is enabled: the enabling duration of the delay-sensitive transmission priority mode corresponding to the AP, and one or more reserved frequency domain units.

In some embodiments, the enabling and/or disabling of the delay-sensitive transmission priority mode corresponding to the AP is associated with transmission information of delay-sensitive data in the basic service set (BSS), or the enabling and/or disabling of the delay-sensitive transmission priority mode corresponding to the AP is set by user signaling.

For example, the AP may enable the delay-sensitive transmission priority mode, and when the delay-sensitive transmission priority mode is enabled, the AP may require the STA during the uplink transmission to reserve frequency domain units for other STAs to report the first indication information to the AP, in the TXOP acquired by itself. For example, the AP may transmit a management frame (e.g., a beacon frame and/or a probe response frame and/or an association response frame and/or a reassociation response frame and/or an operation mode notification frame) to inform the STA that the delay-sensitive transmission priority mode is enabled; optionally, the management frame may further indicate the following information: the enabling duration of the delay-sensitive transmission priority mode, and/or the reserved specific frequency domain unit (i.e., m₁ frequency domain units). For another example, the AP may transmit a management frame (e.g., a beacon frame and/or a probe response frame and/or an association response frame and/or a reassociation response frame and/or an operation mode notification frame) to inform the STA that the delay-sensitive transmission priority mode is disabled.

In some embodiments, the number of frequency domain units reserved by the first STA may be m₁. m₁ may be a positive integer. The first STA or the second STA reserves m₂ frequency domain units in a second uplink transmission. The m₂ frequency domain units are used for one or more other STAs with uplink delay-sensitive data to be transmitted to report first indication information, and m₂ is a positive integer. Exemplarily, the second uplink transmission may be used to transmit low-latency data of the second STA.

For example, a third STA reports the first indication information on m₂ frequency domain units. The m₂ frequency domain units are frequency domain units reserved by the first STA or the second STA in the second uplink transmission, and m₂ is a positive integer.

In some embodiments, the frequency domain units in the m₂ frequency domain units are RUs; or, the frequency domain units in the m₂ frequency domain units are subchannels.

In some embodiments, the frequency domain units in the m₁ frequency domain units are the same as the frequency domain units in the m₂ frequency domain units. For example, the frequency domain units in the m₁ frequency domain units and the frequency domain units in the m₂ frequency domain units are the same RU, or the frequency domain units in the m₁ frequency domain units and the frequency domain units in the m₂ frequency domain units are the same subchannel.

In some embodiments, the frequency domain units in the m₁ frequency domain units are different from the frequency domain units in the m₂ frequency domain units. For example, the frequency domain units in the m₁ frequency domain units are RUs, and the frequency domain units in the m₂ frequency domain units are subchannels. For another example, the frequency domain units in the m₁ frequency domain units are subchannels, and the frequency domain units in the m₂ frequency domain units are RUs. For another example, the frequency domain units in the m₁ frequency domain units and the frequency domain units in the m₂ frequency domain units are RUs at different frequency positions. For another example, the frequency domain units in the m₁ frequency domain units and the frequency domain units in the m₂ frequency domain units are subchannels at different frequency positions.

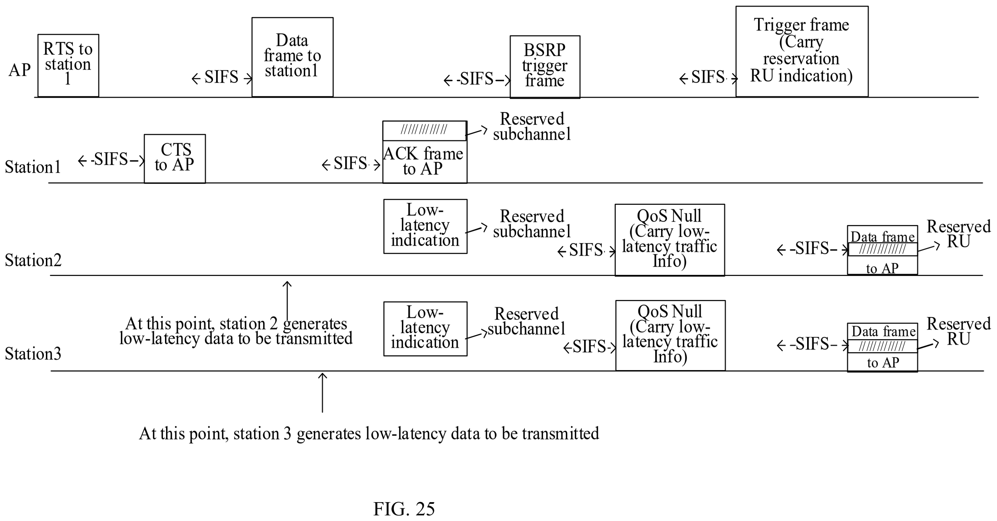

As shown in FIG. 25, station 1 may reserve m₁ subchannels. Station 2 and station 3 report low latency indications on m₁ subchannels. The AP acquires buffer information of station 2 and station 3 through the BSRP trigger frame. According to the acquired buffer information, the AP transmits a trigger frame carrying an RU indication. Based on the RU indication, station 2 may reserve m₂ RUs for other stations to transmit low latency indications. Station 3 may reserve m₂ RUs for other stations to transmit low latency indications.

In some embodiments, the first uplink transmission and the second uplink transmission may belong to the same TXOP, or the first uplink transmission and the second uplink transmission may belong to different TXOPs.

In some embodiments, the first uplink transmission is an uplink transmission in periodic uplink transmissions, and/or the second uplink transmission is an uplink transmission in periodic uplink transmissions.

The technical solutions of the present disclosure are described in detail below through specific embodiments.

### Embodiment 1

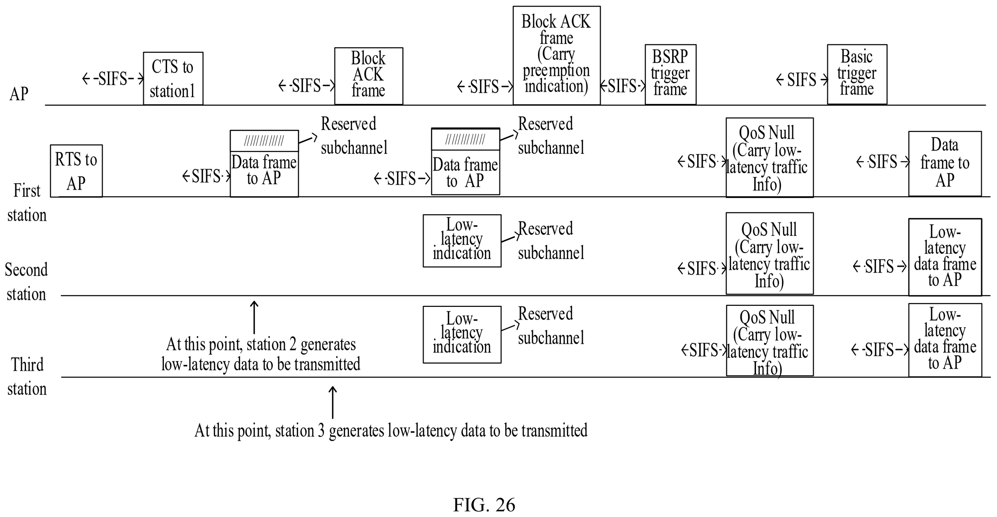

As shown in FIG. 26, the first station obtains a transmission opportunity, and the first station reserves at least one subchannel when performing at least one uplink transmission with the access point. If at least one other station generates uplink low-latency data to be transmitted before that uplink transmission, the other station may use the reserved subchannel to transmit a low latency indication during that uplink transmission, to indicate to the access point that the other station has low-latency traffic to be transmitted and/or needs to preempt the transmission opportunity. After receiving the low latency indication, the access point indicates in a response or acknowledgement to the first station that the access point will preempt the transmission opportunity. After receiving the preemption indication, the first station stops the active uplink transmission. After the access point preempts the transmission opportunity, it will use the existing BSRP trigger frame to acquire the buffer status reports of multiple stations or use the existing NFRP to acquire the null data physical transmission protocol data unit feedback of multiple stations, and then use the existing trigger frame-based uplink transmission procedure to trigger each station (including the other stations and/or the first station) to perform an uplink transmission.

The first station may transmit a data frame and/or a management frame in the uplink transmission with the access point. The existing null data physical transmission protocol data unit feedback (HE TB feedback NDP), and/or the CTS frame, and/or the PPDU newly defined in the present disclosure may be used for the low latency indication. The response or acknowledgement of the access point to the first station may be a management frame and/or an acknowledgement frame and/or a block acknowledgement frame, where the existing trigger frame may be used for the BSRP trigger frame and the basic trigger frame transmitted by the access point to each station, that is, no subchannel or resource unit is reserved in the uplink transmission triggered by that trigger frame; or a trigger frame newly defined in the present disclosure may be also used, which carries a reservation subchannel or resource unit indication, that is, a subchannel or resource unit is also reserved in the uplink transmission triggered by that trigger frame.

In this scenario, there may be three methods for the other station to determine whether the first station has reserved a subchannel or not.

Method 1: the first station switches the mode in advance (i.e., enables the low-latency transmission priority mode), and the access point broadcasts in the beacon frame that the first station has enabled the low-latency transmission priority mode (in this way, the mode switch of the first station takes effect after at least one beacon frame transmission). The reserved specific subchannel information may be predefined, or indicated in the beacon frame. After the first station enables the low-latency transmission priority mode, it always reserves the subchannel in the transmission opportunity acquired by itself.

Method 2: the first station switches the mode in advance (i.e., enables the low-latency transmission priority mode), and the access point transmits a newly defined management frame for broadcast to notify that the first station has enabled the low-latency transmission priority mode. The reserved specific subchannel information may be predefined, or indicated in the newly defined management frame. After the first station enables the low-latency transmission priority mode, it always reserves the subchannel in the transmission opportunity acquired by itself.

Method 3: the first station indicates in an RTS frame transmitted to the access point, for example, by setting the unicast or multicast (individual/group) bit in a receiver address (RA) of the frame to 1 to indicate that the first station has reserved a subchannel in this transmission opportunity, or to 0 to indicate that the first station has not reserved a subchannel in this transmission opportunity. The reserved specific subchannel information may be predefined, or indicated by the access point in a previous beacon frame.

In the transmission opportunity of the first station, the legacy station (legacy STA) does not support the low latency indication function, and does not transmit the low latency indication.

If the existing HE TB feedback NDP is used, the access point does not transmit the NFRP but receives the null data physical transmission protocol data unit feedback, in the transmission opportunity of the first station, so it may distinguish that it is a low latency indication, rather than the buffer data volume report in the existing technology.

### Embodiment 2

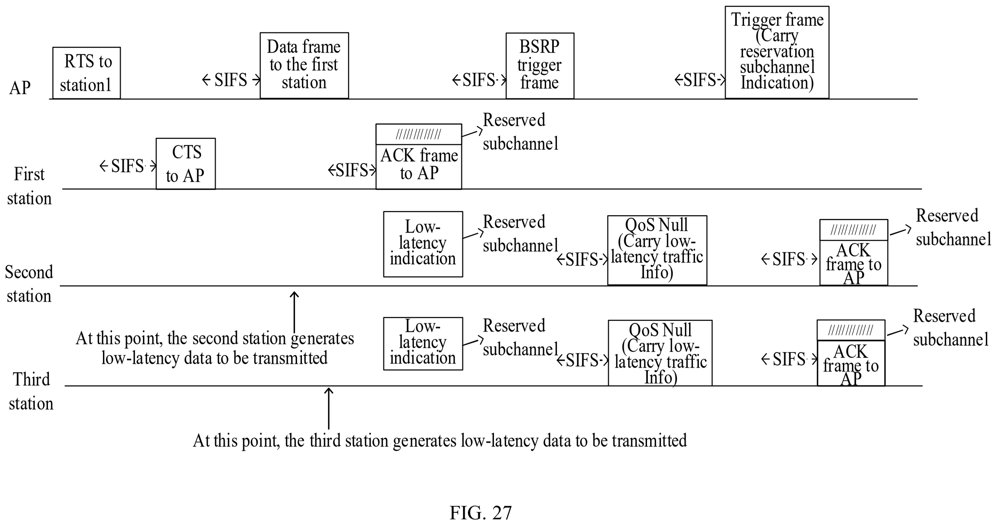

As shown in FIG. 27, the access point acquires the transmission opportunity, the access point performs at least one downlink transmission with the first station, and the first station reserves at least one subchannel when performing an uplink response or acknowledgement to the access point. If at least one other station generates uplink low-latency data to be transmitted before the uplink response or acknowledgement, the other station may use the reserved subchannel to transmit the low latency indication during the uplink response or acknowledgement. After receiving the low latency indication, the access point will use the existing BSRP trigger frame to acquire the buffer status reports of multiple stations or use the existing NFRP to acquire the null data physical transmission protocol data unit feedback of multiple stations, and then use the existing trigger frame-based uplink transmission procedure to trigger each station (including the other station and/or the first station) to perform an uplink transmission.

The downlink transmission between the access point and the first station may be a data frame and/or a management frame. The existing null data physical transmission protocol data unit feedback (HE TB feedback NDP), and/or the CTS frame, and/or the PPDU newly defined in the present disclosure may be used for the low latency indication. The uplink response or acknowledgement of the first station may be a management frame and/or an acknowledgement frame and/or a block acknowledgement frame. The existing trigger frames may be used for the BSRP trigger frame and basic trigger frame transmitted by the access point to each station, that is, no subchannel or resource unit is reserved in the uplink transmission triggered by the trigger frame; or the trigger frame newly defined in the present disclosure may be used, which carries a reservation subchannel or resource unit indication, that is, a subchannel or resource unit is also reserved in the uplink transmission triggered by the trigger frame.

In this scenario, the method for the other station to determine whether the first station has reserved a subchannel or not, is similar to that in Embodiment 1. The difference in Method 3 is that the access point indicates in the RTS frame transmitted to the first station.

### Embodiment 3

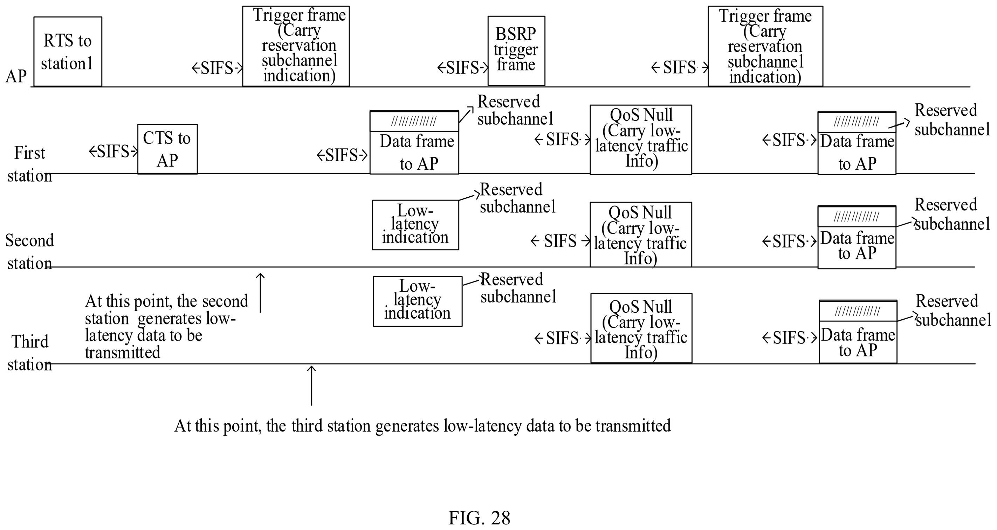

As shown in FIG. 28, the access point acquires the transmission opportunity, the access point triggers the first station to perform at least one uplink transmission, and the first station reserves at least one subchannel during the uplink transmission. If at least one other station generates uplink low-latency data to be transmitted before that uplink transmission, the other station may use the reserved subchannel to transmit the low latency indication during the uplink transmission. After receiving low latency indication, the access point will use the existing BSRP trigger frame to acquire the buffer status reports of multiple stations or use the existing NFRP to acquire the null data physical transmission protocol data unit feedback of multiple stations, and then use the existing trigger frame-based uplink transmission procedure to trigger each station (including the other station and/or the first station) to perform an uplink transmission.

When the access point triggers the first station to perform the uplink transmission, it may use the existing trigger frame (i.e., the predefined or pre-negotiated reserved subchannel reserved in the uplink transmission of the first station), or it may also use the trigger frame newly defined in the present disclosure to carry the reservation subchannel indication. The existing null data physical transmission protocol data unit feedback (HE TB feedback NDP), and/or the CTS frame, and/or the PPDU newly defined in the present disclosure may be used for the low latency indication. The uplink transmission of the first station may be a data frame and/or a management frame and/or an acknowledgement frame and/or a block acknowledgement frame, where the existing trigger frame may be used for the trigger frame transmitted by the access point to each station, that is, no subchannel or resource unit is reserved in the uplink transmission triggered by the trigger frame; or the trigger frame newly defined in the present disclosure may be used, which carries a reservation subchannel or resource unit indication, that is, a subchannel or resource unit is also reserved in the uplink transmission triggered by the trigger frame.

In Embodiment 3, the method for the other station to determine whether the first station has reserved a subchannel or not is: indicating in the trigger frame of the access point, or indicating in the RTS frame using Method 3 in Embodiment 2.

### Embodiment 4

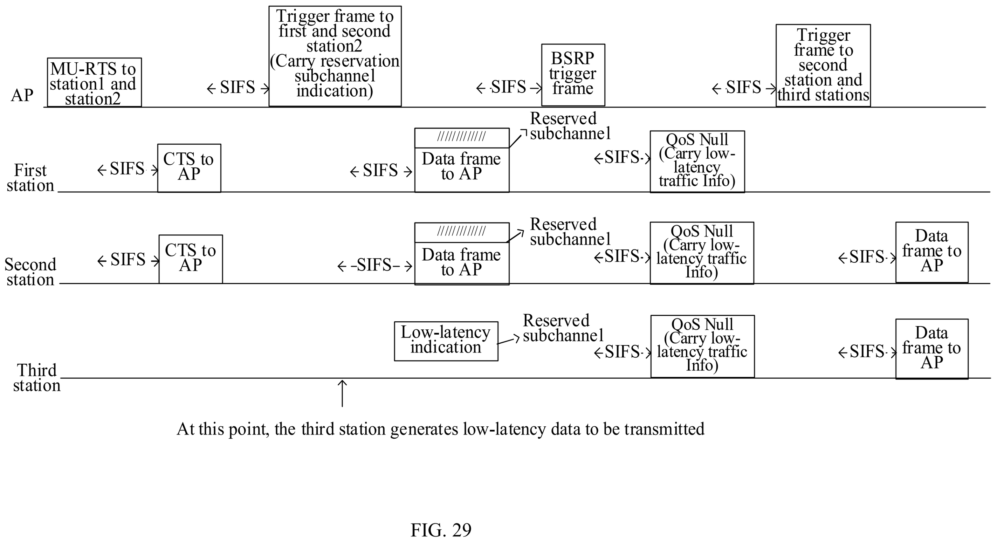

As shown in FIG. 29, similar to Embodiment 3, after the access point acquires the transmission opportunity, the access point triggers multiple first stations (the first stations further include the second station) to perform at least one uplink transmission.

In Embodiment 4, the method for the other station to determine whether the first station has reserved a subchannel or not is: indicating in the trigger frame of the access point, or indicating in the MU-RTS trigger frame similar to Method 3 in Embodiment 2.

### Embodiment 5

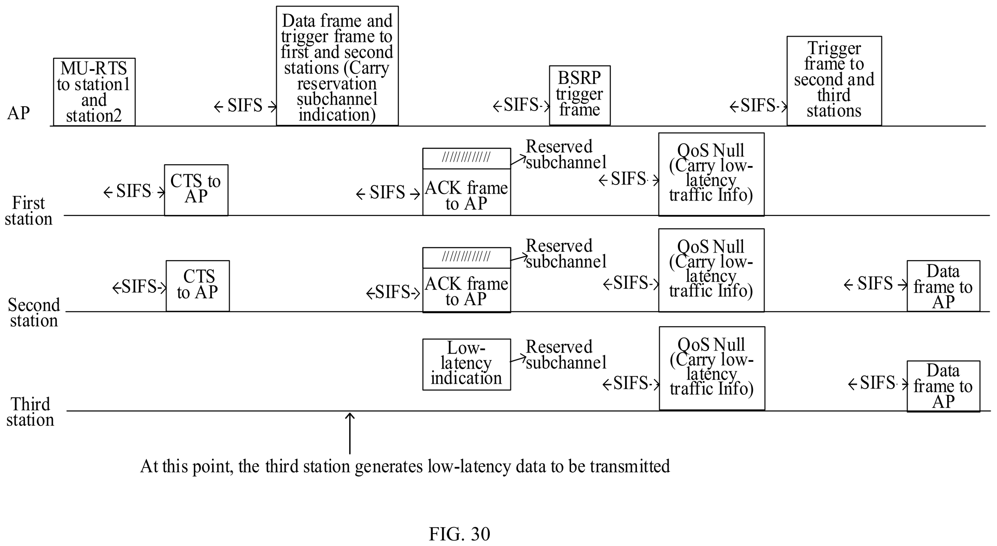

As shown in FIG. 30, similar to Embodiment 4, after the access point acquires the transmission opportunity, the access point performs at least one downlink transmission to at least one first station, and meanwhile, triggers at least one second station to perform at least one uplink transmission, where the first station of the access point may be the same as or different from the second station.

In this scenario, the method for the other station to determine whether the first station has reserved a subchannel or not is the same as that in Embodiment 4.

### Embodiment 6

In the scenario described in Embodiment 1, the first station may use any format of PPDU supported by it except the TB PPDU, when performing the uplink transmission with the access point. In this case, it is difficult for the other station to predict the preamble signal of the PPDU and it cannot use only an RU that does not occupy a certain entire 20 MHz subchannel to transmit the NDP. On the same 20 MHz subchannel, if the transmitter transmits different PPDU preambles, interference will occur, causing the receiver to be unable to correctly receive the PPDU. Therefore, the method for reserving an RU is limited in this scenario, and only the RU that occupies the entire 20 MHz subchannel can be reserved, which is essentially the same as the method of reserving a subchannel.

In the scenario described in Embodiment 2, the first station may use any format of PPDU supported by it except the TB PPDU, when performing the uplink response or acknowledgement with the access point. Similarly, the method of reserving the RU is limited in this scenario, and only the RU that occupies the entire 20 MHz subchannel can be reserved, which is essentially the same as the method of reserving a subchannel.

### Embodiment 7

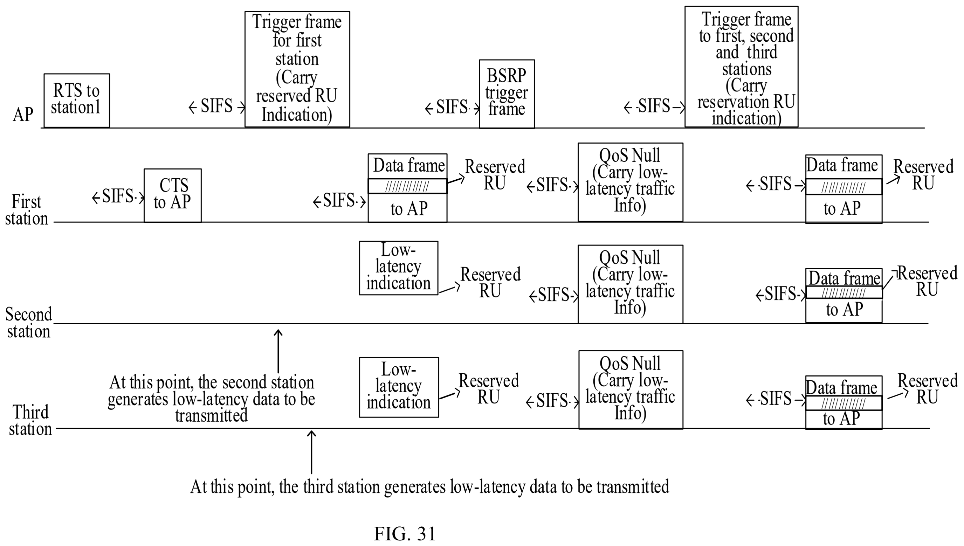

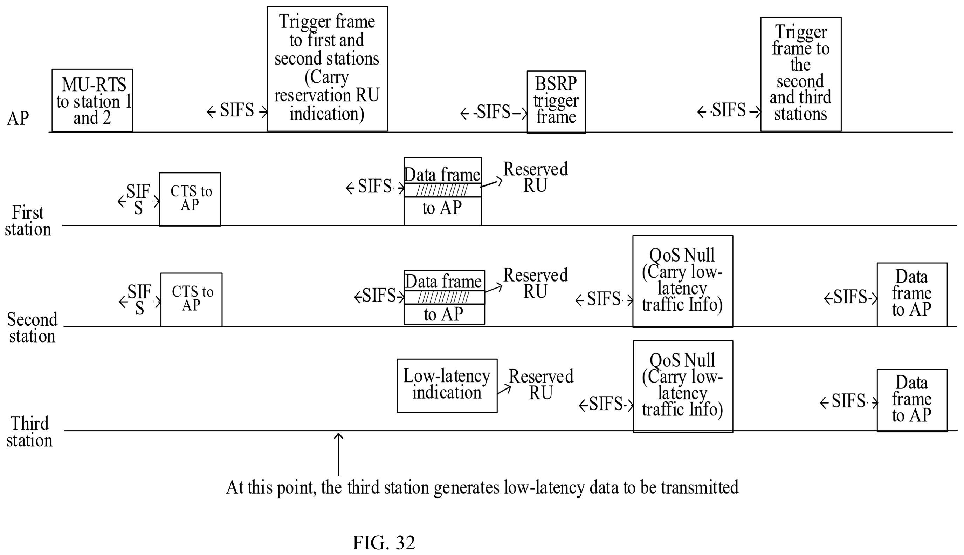

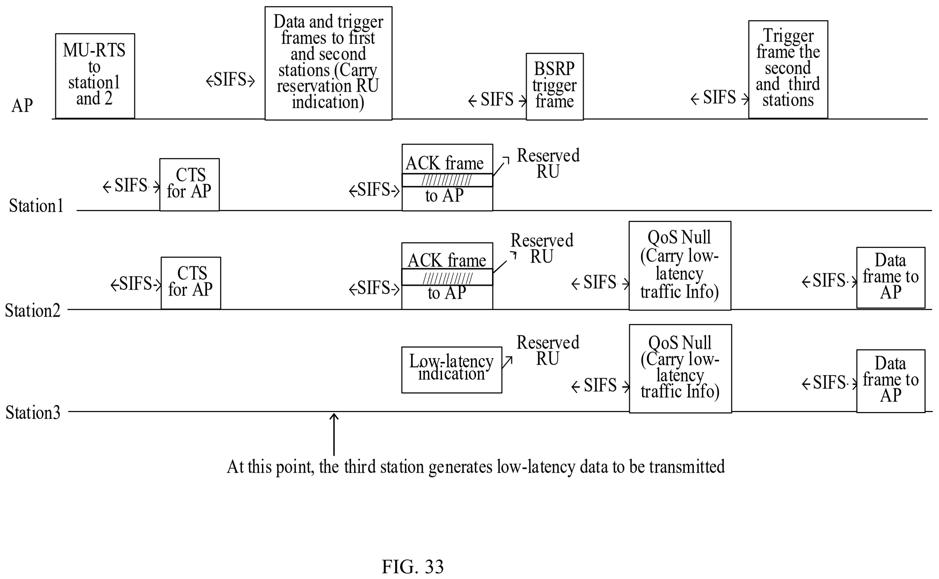

In the scenario described in at least one of Embodiment 3, Embodiment 4 and Embodiment 5, the first station may reserve at least one RU in its operation bandwidth. FIG. 31 shows an example of reserving at least one RU by the first station in the scenario described in Embodiment 3. FIG. 32 shows an example of reserving at least one RU by the first station in the scenario described in Embodiment 4. FIG. 33 shows an example of reserving at least one RU by the first station in the scenario described in Embodiment 5.

All stations may predict the preamble of the TB PPDU to be uplink transmitted, by receiving the trigger frame transmitted by the access point, so the transmission of the PPDU using the same preamble by the other station on at least one RU will not cause interference.

This is because the existing HE TB feedback NDP format can only be transmitted on one or more entire 20 MHz subchannels. The HE TB feedback NDP format can only be used in a case where the reserved RU occupies one or more entire 20 MHz subchannels.

In a case where the reserved RU occupies only a part of a certain 20 MHz subchannel, the CTS frame and/or the second-type PPDU newly defined in the present disclosure can only be used for the low latency indication. If the CTS frame (carried in the data field in the PPDU) is specifically used for the low latency indication, the existing format may be used for the TB PPDU triggered by the trigger frame. If the LTF field in the preamble of the newly defined PPDU is specifically used for the low latency indication, the LTF field of the TB PPDU triggered by the trigger frame also needs to be modified (i.e., not transmitted on the reserved RU).

It should be noted that, in the embodiments of the present disclosure, the "field" may also be referred to as a "field" or a "subfield". A field may occupy one or more bytes/octets, or a field may occupy one or more bits.

The method embodiments of the present disclosure are described in detail above, and apparatus embodiments of the present disclosure are described in detail below. It should be understood that the description of the method embodiments corresponds to the description of the apparatus embodiments, and therefore, for any sections not described in detail, reference may be made to the above method embodiments.

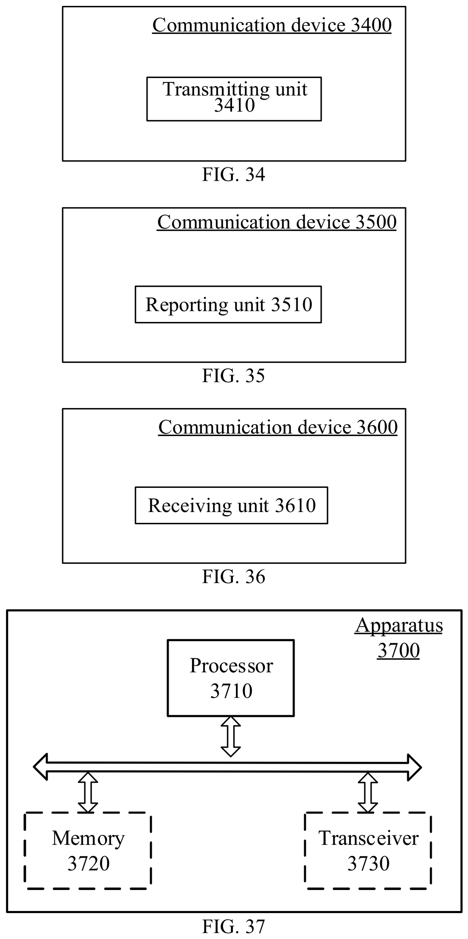

FIG. 34 is a block diagram of a communication device 3400 provided in the embodiments of the present disclosure. The communication device 3400 is a first STA. The communication device 3400 includes a transmitting unit 3410.

The transmitting unit is configured to transmit a first uplink transmission to an access point (AP) in a first TXOP; where the first STA reserves one or more frequency domain units in the first uplink transmission, and the one or more frequency domain units are used for a second STA to report first indication information, and the first indication information is used to indicate that: the second STA comprises low-latency traffic to be transmitted, and/or the second STA needs to preempt the first TXOP.

In some embodiments, the first indication information is used to indicate that: one or more STAs of all STAs associated with the AP comprise low-latency traffic to be transmitted, and/or one or more STAs of all STAs associated with the AP need to preempt the first TXOP.

In some embodiments, a plurality of STAs associated with the AP are divided into one or more STA groups, the one or more STA groups include a first STA group, the first STA group includes the second STA, and the first indication information is used to indicate that: one or more STAs in the first STA group comprise low-latency traffic to be transmitted, and/or one or more STAs in the first STA group need to preempt the first TXOP.

In some embodiments, the device 3400 is further configured to: receive a first trigger frame; where the first trigger frame includes a first field, and the first field is used to indicate one or more of: a number of STAs in the first STA group, and a number of the one or more STA groups.

In some embodiments, the first trigger frame further includes a second field, and the second field is used to indicate a minimum association identifier of the plurality of STAs associated with the AP.

In some embodiments, the first uplink transmission is transmitted via a first-type physical layer protocol data unit (PPDU); an LTF field in a preamble of the first-type PPDU is not uplink transmitted on the reserved one or more frequency domain units.

In some embodiments, the first indication information is reported via one or more of NDPs including: an HE TB feedback NDP, an HE sounding NDP, an EHT sounding NDP, and a UHR sounding NDP.

In some embodiments, the first indication information is reported via a second-type PPDU; and the first indication information is carried in a long training field (LTF) field in a preamble of the second-type PPDU.

In some embodiments, the first indication information is reported via a third-type PPDU; and the first indication information is carried in a data field of the third-type PPDU.

In some embodiments, the first indication information is carried in one or more LTF symbols in the data field.

In some embodiments, the first indication information is reported via a CTS frame carried by the data field.

In some embodiments, a scrambler seed of the data field meets one or more of: predefined, pre-notified, and indicated by a trigger frame.

In an optional embodiment, the transmitting unit 3410 may be a transceiver 3730. The communication device 3400 may further include a processor 3710 and a memory 3720, as specifically shown in FIG. 37.

FIG. 35 is a schematic structural diagram of a communication device 3500 provided in the embodiments of the present disclosure. The communication device 3500 is a second STA, and the communication device 3500 includes: a reporting unit 3510.

The reporting unit 3510 is configured to report first indication information to an AP on one or more frequency domain units in a first TXOP; where the one or more frequency domain units are frequency domain resources that are reserved by a first STA in a first uplink transmission, and the first indication information is used to indicate that: the second STA comprises low-latency traffic to be transmitted, and/or the second STA needs to preempt the first TXOP.

In some embodiments, the first indication information is used to indicate that: one or more STAs of all STAs associated with the AP comprise low-latency traffic to be transmitted, and/or one or more STAs of all STAs associated with the AP need to preempt the first TXOP.

In some embodiments, a plurality of STAs associated with the AP are divided into one or more STA groups, the one or more STA groups include a first STA group, the first STA group includes the second STA, and the first indication information is used to indicate that: one or more STAs in the first STA group comprise low-latency traffic to be transmitted, and/or one or more STAs in the first STA group need to preempt the first TXOP.

In some embodiments, the communication device 3500 is further configured to: receive a first trigger frame; where the first trigger frame includes a first field, and the first field is used to indicate one or more of: a number of STAs in the first STA group, and a number of the one or more STA groups.

In some embodiments, the first trigger frame further includes a second field, and the second field is used to indicate a minimum association identifier of the plurality of STAs associated with the AP.

In some embodiments, the first uplink transmission is transmitted via a first-type physical layer protocol data unit (PPDU); an LTF field in a preamble of the first-type PPDU is not uplink transmitted on the reserved one or more frequency domain units.

In some embodiments, the first indication information is reported via one or more of NDPs including: an HE TB feedback NDP, an HE sounding NDP, an EHT sounding NDP, and a UHR sounding NDP.

In some embodiments, the first indication information is reported via a second-type PPDU; and the first indication information is carried in an LTF field in a preamble of the second-type PPDU.

In some embodiments, the first indication information is reported via a third-type PPDU; and the first indication information is carried in a data field of the third-type PPDU.

In some embodiments, the first indication information is carried in one or more LTF symbols in the data field.

In some embodiments, the first indication information is reported via a CTS frame carried by the data field.

In some embodiments, a scrambler seed of the data field meets one or more of: predefined, pre-notified, and indicated by a trigger frame.

In an optional embodiment, the reporting unit 3510 may be a transceiver 3730. The communication device 3500 may further include a processor 3710 and a memory 3720, as specifically shown in FIG. 37.

FIG. 36 is a block diagram of a communication device 3600 provided in the embodiments of the present disclosure. The communication device 3600 is an AP. The communication device 3600 includes a receiving unit 3610.

The receiving unit 3610 is configured to receive a first uplink transmission of a first STA in a first TXOP; where the first STA reserves one or more frequency domain units in the first uplink transmission, and the one or more frequency domain units are used for a second STA to report first indication information, and the first indication information is used to indicate that: the second STA comprises low-latency traffic to be transmitted, and/or the second STA needs to preempt the first TXOP.

In some embodiments, the first indication information is used to indicate that: one or more STAs of all STAs associated with the AP comprise low-latency traffic to be transmitted, and/or one or more STAs of all STAs associated with the AP need to preempt the first TXOP.

In some embodiments, a plurality of STAs associated with the AP are divided into one or more STA groups, the one or more STA groups include a first STA group, the first STA group includes the second STA, and the first indication information is used to indicate that: one or more STAs in the first STA group comprise low-latency traffic to be transmitted, and/or one or more STAs in the first STA group need to preempt the first TXOP.

In some embodiments, the communication device 3600 is further configured to: transmit a first trigger frame; where the first trigger frame includes a first field, and the first field is used to indicate one or more of: a number of STAs in the first STA group, and a number of the one or more STA groups.

In some embodiments, the first trigger frame further includes a second field, and the second field is used to indicate a minimum association identifier of the plurality of STAs associated with the AP.

In some embodiments, the first uplink transmission is transmitted via a first-type physical layer protocol data unit (PPDU); an LTF field in a preamble of the first-type PPDU is not uplink transmitted on the reserved one or more frequency domain units.

In some embodiments, the first indication information is reported via one or more of NDPs including: an HE TB feedback NDP, an HE sounding NDP, an EHT sounding NDP, and a UHR sounding NDP.

In some embodiments, the first indication information is reported via a second-type PPDU; and the first indication information is carried in a long training field (LTF) field in a preamble of the second-type PPDU.

In some embodiments, the first indication information is reported via a third-type PPDU; and the first indication information is carried in a data field of the third-type PPDU.

In some embodiments, the first indication information is carried in one or more LTF symbols in the data field.

In some embodiments, the first indication information is reported via a CTS frame carried by the data field.

In some embodiments, a scrambler seed of the data field meets one or more of: predefined, pre-notified, and indicated by a trigger frame.

In an optional embodiment, the receiving unit 3610 may be a transceiver 3430. The communication device 3600 may further include a processor 3710 and a memory 3720, as specifically shown in FIG. 37.

FIG. 37 is a schematic structural diagram of an apparatus for communication in the embodiments of the present disclosure. The dashed lines in FIG. 37 indicate that the unit or modules are optional. The apparatus 3700 may be configured to implement the methods described in the above method embodiments. The apparatus 3700 may be a chip, a terminal device, or a network device.

The apparatus 3700 may include one or more processors 3710. The processor 3710 may support the apparatus 3700 to implement the methods described in the above method embodiments. The processor 3710 may be a general-purpose processor or a dedicated-purpose processor. For example, the processor may be a central processing unit (CPU). Alternatively, the processor may be other general-purpose processors, a digital signal processors (DSP), an application specific integrated circuits (ASIC), a field programmable gate array (FPGA) or other programmable logic devices, discrete gate or transistor logic devices, discrete hardware components, etc. A general-purpose processor may be a microprocessor, or the processor may be any conventional processor or the like.

The apparatus 3700 may further include one or more memories 3720. The memory 3720 stores a program thereon, and the program may be executed by the processor 3710, to cause the processor 3710 to perform the methods in the above method embodiments. The memory 3720 may be independent of the processor 3710 or may be integrated into the processor 3710.

The apparatus 3700 may further include a transceiver 3730. The processor 3710 may communicate with other devices or chips via the transceiver 3730. For example, the processor 3710 may transmit and receive data with other devices or chips via the transceiver 3730.

The embodiments of the present disclosure further provide a computer-readable storage medium configured to store a program. The computer-readable storage medium may be applied to the terminal or the network device provided in the embodiments of the present disclosure, and the program causes a computer to perform the methods performed by the terminal or the network device in various embodiments of the present disclosure.

The embodiments of the present disclosure further provide a computer program product. The computer program product includes a program. The computer program product may be applied to the terminal or the network device provided in the embodiments of the present disclosure, and the program causes a computer to perform the methods performed by the terminal or the network device in various embodiments of the present disclosure.

The embodiments of the present disclosure further provide a computer program. The computer program may be applied to the terminal or the network device provided in the embodiments of the present disclosure, and the computer program causes a computer to perform the methods performed by the terminal or the network device in various embodiments of the present disclosure.

It should be understood that the terms "system" and "network" may be used interchangeably in the present disclosure. In addition, the terms used in the present disclosure are only used to explain the specific embodiments of the present disclosure and are not intended to limit the present disclosure. The terms "first", "second", "third", "fourth" and the like in the specification, claims and drawings of the present disclosure are used to distinguish different objects rather than to describe a specific order. In addition, the terms "includes/comprises", "has/have" and any variations thereof, are intended to cover a non-exclusive inclusion.

The "indication" and variants thereof mentioned in the embodiments of the present disclosure may be a direct indication, an indirect indication, or also represent an associated relationship. For example, A indicates B, which may mean that A directly indicates B, and for example, B may be acquired by A; it may also mean that A indirectly indicates B, and for example, A indicates C, and B may be acquired by C; it may also mean that there is an association relationship between A and B.

In the embodiments of the present disclosure, "B corresponding to A" means that B is associated with A, and B may be determined according to A. However, it should also be understood that determining B according to A does not mean determining B according to A only, and B may also be determined based on A and/or other information.

In the embodiments of the present disclosure, the term "corresponding" and variants thereof may indicate a direct or indirect correspondence between two items, or an association relationship between the two items, or a relationship between indicating and being indicated, configuring and being configured, etc.

In the embodiments of the present disclosure, the "predefined" or "pre-configured" and variations thereof may be implemented by pre-storing corresponding codes, tables or other manners that may be used to indicate related information, in the device (for example, including the terminal device and the network device), and the present disclosure does not limit its specific implementation. For example, the predefined may refer to what is defined in a protocol.

In the embodiments of the present disclosure, the term "and/or" herein is only an association relationship to describe associated objects, indicating that there may be three kinds of relationships, and for example, "A and/or B" may represent three cases where: A exists alone, both A and B exist, and B exist alone. In addition, a character "/" herein generally indicates that the associated objects before and after this character are in an "or" relationship.

In the embodiments of the present disclosure, the "include" may refer to direct inclusion or indirect inclusion. Optionally, the term "include" mentioned in the embodiments of the present disclosure may be replaced with "indicate" or "used for determining". For example, A including B may be replaced by A indicating B, or A being used for determining B.

In various embodiments of the present disclosure, values of serial numbers of the aforementioned processes do not mean an execution order, and the execution order of each process shall be determined by its function and internal logic, and shall not impose any limitation on the implementation process of the embodiments of the present disclosure.

In the embodiments of the present disclosure, the term "protocol" may refer to a standard protocol in the field of communications, and for example, it may include a WiFi protocol and a related protocol applied in a future WiFi communication system, which is not limited in the present disclosure.

It shall be understood that the disclosed systems, apparatuses, and methods in several embodiments provided in the present disclosure may be implemented in other modes. For example, the apparatus embodiments described above are merely exemplary, and for example, a division of units is merely a division based on logical functions, while other divisions exist in actual implementations. For example, a plurality of units or components may be combined or integrated into another system, or some features may be omitted or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present disclosure may be integrated into one processing unit, or the various units may exist physically separately, or two or more units may be integrated into one unit.

All or part of the above embodiments may be implemented by software, hardware, firmware or any combination thereof. When implemented by using software, all or part of the embodiments may be implemented in a form of a computer program product. The computer program product includes one or more computer instructions. When the computer program instructions are loaded and executed on a computer, all or part of the procedures or functions described according to the embodiments of the present disclosure are generated. The computer may be a general-purpose computer, a dedicated-purpose computer, a computer network, or other programmable apparatuses. The computer instructions may be stored in a computer-readable storage medium, or transmitted from a computer-readable storage medium to another computer-readable storage medium. For example, the computer instructions may be transmitted from a website, a computer, a server, or a data center to another website, another computer, another server, or another data center via a wired mode (e.g., a coaxial cable, optical fiber, a digital subscriber line (DSL)) or a wireless mode (e.g., an infrared, radio, microwave, etc.). The computer-readable storage medium may be any available medium that can be read by a computer, or a data storage device including a server or a data center integrated with one or more available media, etc. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The above content is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be determined based on the protection scope of the claims.

## Claims

1. A wireless communication method, comprising:
transmitting, by a first station (STA), a first uplink transmission to an access point (AP) in a first transmission opportunity (TXOP);
wherein the first STA reserves one or more frequency domain units in the first uplink transmission, and the one or more frequency domain units are used for a second STA to report first indication information, and the first indication information is used to indicate that: the second STA comprises low-latency traffic to be transmitted, and/or the second STA needs to preempt the first TXOP.

2. The method according to claim 1, wherein the first indication information is used to indicate that: one or more STAs of all STAs associated with the AP comprise low-latency traffic to be transmitted, and/or one or more STAs of all STAs associated with the AP need to preempt the first TXOP.

3. The method according to claim 1, wherein a plurality of STAs associated with the AP are divided into one or more STA groups, the one or more STA groups comprise a first STA group, the first STA group comprises the second STA, and the first indication information is used to indicate that: one or more STAs in the first STA group comprise low-latency traffic to be transmitted, and/or one or more STAs in the first STA group need to preempt the first TXOP.

4. The method according to claim 3, further comprising:
receiving, by the first STA, a first trigger frame;
wherein the first trigger frame comprises a first field, and the first field is used to indicate one or more of: a number of STAs in the first STA group, and a number of the one or more STA groups.

5. The method according to claim 4, wherein the first trigger frame further comprises a second field, and the second field is used to indicate a minimum association identifier of the plurality of STAs associated with the AP.

6. The method according to any one of claims 1 to 5, wherein the first uplink transmission is transmitted via a first-type physical layer protocol data unit (PPDU); a long training field (LTF) field in a preamble of the first-type PPDU is not uplink transmitted on the reserved one or more frequency domain units.

7. The method according to any one of claims 1 to 6, wherein the first indication information is reported via one or more of null data physical protocol data units (NDPs) comprising: a high efficiency trigger based feedback NDP (HE TB feedback NDP), a high efficiency sounding NDP (HE sounding NDP), an extremely high throughput sounding NDP (EHT sounding NDP), and an ultra high reliability sounding NDP (UHR sounding NDP).

8. The method according to any one of claims 1 to 6, wherein the first indication information is reported via a second-type PPDU; and the first indication information is carried in an LTF field in a preamble of the second-type PPDU.

9. The method according to any one of claims 1 to 6, wherein the first indication information is reported via a third-type PPDU; and the first indication information is carried in a data field of the third-type PPDU.

10. The method according to claim 9, wherein the first indication information is carried in one or more LTF symbols in the data field.

11. The method according to claim 9, wherein the first indication information is reported via a clear-to-send (CTS) frame carried by the data field.

12. The method according to any one of claims 9 to 11, wherein a scrambler seed of the data field meets one or more of: predefined, pre-notified, and indicated by a trigger frame.

13. A wireless communication method, comprising:
reporting, by a second station (STA), first indication information to an access point (AP) on one or more frequency domain units in a first transmission opportunity (TXOP);
wherein the one or more frequency domain units are frequency domain resources that are reserved by a first STA in a first uplink transmission, and the first indication information is used to indicate that: the second STA comprises low-latency traffic to be transmitted, and/or the second STA needs to preempt the first TXOP.

14. The method according to claim 13, wherein the first indication information is used to indicate that: one or more STAs of all STAs associated with the AP comprise low-latency traffic to be transmitted, and/or one or more STAs of all STAs associated with the AP need to preempt the first TXOP.

15. The method according to claim 13, wherein a plurality of STAs associated with the AP are divided into one or more STA groups, the one or more STA groups comprise a first STA group, the first STA group comprises the second STA, and the first indication information is used to indicate that: one or more STAs in the first STA group comprise low-latency traffic to be transmitted, and/or one or more STAs in the first STA group need to preempt the first TXOP.

16. The method according to claim 15, further comprising:
receiving, by the second STA, a first trigger frame;
wherein the first trigger frame comprises a first field, and the first field is used to indicate one or more of: a number of STAs in the first STA group, and a number of the one or more STA groups.

17. The method according to claim 16, wherein the first trigger frame further comprises a second field, and the second field is used to indicate a minimum association identifier of the plurality of STAs associated with the AP.

18. The method according to any one of claims 13 to 17, wherein the first uplink transmission is transmitted via a first-type physical layer protocol data unit (PPDU); a long training field (LTF) field in a preamble of the first-type PPDU is not uplink transmitted on the reserved one or more frequency domain units.

19. The method according to any one of claims 13 to 18, wherein the first indication information is reported via one or more of null data physical protocol data units (NDPs) comprising: a high efficiency trigger based feedback NDP (HE TB feedback NDP), a high efficiency sounding NDP (HE sounding NDP), an extremely high throughput sounding NDP (EHT sounding NDP), and an ultra high reliability sounding NDP (UHR sounding NDP).

20. The method according to any one of claims 13 to 18, wherein the first indication information is reported via a second-type PPDU; and the first indication information is carried in an LTF field in a preamble of the second-type PPDU.

21. The method according to any one of claims 13 to 18, wherein the first indication information is reported via a third-type PPDU; and the first indication information is carried in a data field of the third-type PPDU.

22. The method according to claim 21, wherein the first indication information is carried in one or more LTF symbols in the data field.

23. The method according to claim 21, wherein the first indication information is reported via a clear-to-send (CTS) frame carried by the data field.

24. The method according to any one of claims 21 to 23, wherein a scrambler seed of the data field meets one or more of: predefined, pre-notified, and indicated by a trigger frame.

25. A wireless communication method, comprising:
receiving, by an access point (AP), a first uplink transmission of a first station (STA) in a first transmission opportunity (TXOP);
wherein the first STA reserves one or more frequency domain units in the first uplink transmission, and the one or more frequency domain units are used for a second STA to report first indication information, and the first indication information is used to indicate that: the second STA comprises low-latency traffic to be transmitted, and/or the second STA needs to preempt the first TXOP.

26. The method according to claim 25, wherein the first indication information is used to indicate that: one or more STAs of all STAs associated with the AP comprise low-latency traffic to be transmitted, and/or one or more STAs of all STAs associated with the AP need to preempt the first TXOP.

27. The method according to claim 25, wherein a plurality of STAs associated with the AP are divided into one or more STA groups, the one or more STA groups comprise a first STA group, the first STA group comprises the second STA, and the first indication information is used to indicate that: one or more STAs in the first STA group comprise low-latency traffic to be transmitted, and/or one or more STAs in the first STA group need to preempt the first TXOP.

28. The method according to claim 27, further comprising:
transmitting, by the AP, a first trigger frame;
wherein the first trigger frame comprises a first field, and the first field is used to indicate one or more of: a number of STAs in the first STA group, and a number of the one or more STA groups.

29. The method according to claim 28, wherein the first trigger frame further comprises a second field, and the second field is used to indicate a minimum association identifier of the plurality of STAs associated with the AP.

30. The method according to any one of claims 25 to 29, wherein the first uplink transmission is transmitted via a first-type physical layer protocol data unit (PPDU); a long training field (LTF) field in a preamble of the first-type PPDU is not uplink transmitted on the reserved one or more frequency domain units.

31. The method according to any one of claims 25 to 30, wherein the first indication information is reported via one or more of null data physical protocol data units (NDPs) comprising: a high efficiency trigger based feedback NDP (HE TB feedback NDP), a high efficiency sounding NDP (HE sounding NDP), an extremely high throughput sounding NDP (EHT sounding NDP), and an ultra high reliability sounding NDP (UHR sounding NDP).

32. The method according to any one of claims 25 to 30, wherein the first indication information is reported via a second-type PPDU; and the first indication information is carried in an LTF field in a preamble of the second-type PPDU.

33. The method according to any one of claims 25 to 30, wherein the first indication information is reported via a third-type PPDU; and the first indication information is carried in a data field of the third-type PPDU.

34. The method according to claim 33, wherein the first indication information is carried in one or more LTF symbols in the data field.

35. The method according to claim 33, wherein the first indication information is reported via a clear-to-send (CTS) frame carried by the data field.

36. The method according to any one of claims 33 to 35, wherein a scrambler seed of the data field meets one or more of: predefined, pre-notified, and indicated by a trigger frame.

37. A communication device, wherein the device is a first station (STA), and the communication device comprises:
a transmitting unit, configured to transmit a first uplink transmission to an access point (AP) in a first transmission opportunity (TXOP);
wherein the first STA reserves one or more frequency domain units in the first uplink transmission, and the one or more frequency domain units are used for a second STA to report first indication information, and the first indication information is used to indicate that: the second STA comprises low-latency traffic to be transmitted, and/or the second STA needs to preempt the first TXOP.

38. The device according to claim 37, wherein the first indication information is used to indicate that: one or more STAs of all STAs associated with the AP comprise low-latency traffic to be transmitted, and/or one or more STAs of all STAs associated with the AP need to preempt the first TXOP.

39. The device according to claim 37, wherein a plurality of STAs associated with the AP are divided into one or more STA groups, the one or more STA groups comprise a first STA group, the first STA group comprises the second STA, and the first indication information is used to indicate that: one or more STAs in the first STA group comprise low-latency traffic to be transmitted, and/or one or more STAs in the first STA group need to preempt the first TXOP.

40. The device according to claim 39, wherein the device is further configured to:
receive a first trigger frame;
wherein the first trigger frame comprises a first field, and the first field is used to indicate one or more of: a number of STAs in the first STA group, and a number of the one or more STA groups.

41. The device according to claim 40, wherein the first trigger frame further comprises a second field, and the second field is used to indicate a minimum association identifier of the plurality of STAs associated with the AP.

42. The device according to any one of claims 37 to 41, wherein the first uplink transmission is transmitted via a first-type physical layer protocol data unit (PPDU); a long training field (LTF) field in a preamble of the first-type PPDU is not uplink transmitted on the reserved one or more frequency domain units.

43. The device according to any one of claims 37 to 42, wherein the first indication information is reported via one or more of null data physical protocol data units (NDPs) comprising: a high efficiency trigger based feedback NDP (HE TB feedback NDP), a high efficiency sounding NDP (HE sounding NDP), an extremely high throughput sounding NDP (EHT sounding NDP), and an ultra high reliability sounding NDP (UHR sounding NDP).

44. The device according to any one of claims 37 to 42, wherein the first indication information is reported via a second-type PPDU; and the first indication information is carried in an LTF field in a preamble of the second-type PPDU.

45. The device according to any one of claims 37 to 42, wherein the first indication information is reported via a third-type PPDU; and the first indication information is carried in a data field of the third-type PPDU.

46. The device according to claim 45, wherein the first indication information is carried in one or more LTF symbols in the data field.

47. The device according to claim 45, wherein the first indication information is reported via a clear-to-send (CTS) frame carried by the data field.

48. The device according to any one of claims 45 to 47, wherein a scrambler seed of the data field meets one or more of: predefined, pre-notified, and indicated by a trigger frame.

49. A communication device, wherein the device is a second station (STA), and the device comprises:
a reporting unit, configured to report first indication information to an access point (AP) on one or more frequency domain units in a first transmission opportunity (TXOP);
wherein the one or more frequency domain units are frequency domain resources that are reserved by a first STA in a first uplink transmission, and the first indication information is used to indicate that: the second STA comprises low-latency traffic to be transmitted, and/or the second STA needs to preempt the first TXOP.

50. The device according to claim 49, wherein the first indication information is used to indicate that: one or more STAs of all STAs associated with the AP comprise low-latency traffic to be transmitted, and/or one or more STAs of all STAs associated with the AP need to preempt the first TXOP.

51. The device according to claim 49, wherein a plurality of STAs associated with the AP are divided into one or more STA groups, the one or more STA groups comprise a first STA group, the first STA group comprises the second STA, and the first indication information is used to indicate that: one or more STAs in the first STA group comprise low-latency traffic to be transmitted, and/or one or more STAs in the first STA group need to preempt the first TXOP.

52. The device according to claim 51, wherein the device is further configured to:
receive a first trigger frame;
wherein the first trigger frame comprises a first field, and the first field is used to indicate one or more of: a number of STAs in the first STA group, and a number of the one or more STA groups.

53. The device according to claim 52, wherein the first trigger frame further comprises a second field, and the second field is used to indicate a minimum association identifier of the plurality of STAs associated with the AP.

54. The device according to any one of claims 49 to 53, wherein the first uplink transmission is transmitted via a first-type physical layer protocol data unit (PPDU); a long training field (LTF) field in a preamble of the first-type PPDU is not uplink transmitted on the reserved one or more frequency domain units.

55. The device according to any one of claims 49 to 54, wherein the first indication information is reported via one or more of null data physical protocol data units (NDPs) comprising: a high efficiency trigger based feedback NDP (HE TB feedback NDP), a high efficiency sounding NDP (HE sounding NDP), an extremely high throughput sounding NDP (EHT sounding NDP), and an ultra high reliability sounding NDP (UHR sounding NDP).

56. The device according to any one of claims 49 to 54, wherein the first indication information is reported via a second-type PPDU; and the first indication information is carried in an LTF field in a preamble of the second-type PPDU.

57. The device according to any one of claims 49 to 54, wherein the first indication information is reported via a third-type PPDU; and the first indication information is carried in a data field of the third-type PPDU.

58. The device according to claim 57, wherein the first indication information is carried in one or more LTF symbols in the data field.

59. The device according to claim 57, wherein the first indication information is reported via a clear-to-send (CTS) frame carried by the data field.

60. The device according to any one of claims 57 to 59, wherein a scrambler seed of the data field meets one or more of: predefined, pre-notified, and indicated by a trigger frame.

61. A communication device, wherein the device is an access point (AP), and the communication device comprises:
a receiving unit, configured to receive a first uplink transmission of a first station (STA) in a first transmission opportunity (TXOP);
wherein the first STA reserves one or more frequency domain units in the first uplink transmission, and the one or more frequency domain units are used for a second STA to report first indication information, and the first indication information is used to indicate that: the second STA comprises low-latency traffic to be transmitted, and/or the second STA needs to preempt the first TXOP.

62. The device according to claim 61, wherein the first indication information is used to indicate that: one or more STAs of all STAs associated with the AP comprise low-latency traffic to be transmitted, and/or one or more STAs of all STAs associated with the AP need to preempt the first TXOP.

63. The device according to claim 61, wherein a plurality of STAs associated with the AP are divided into one or more STA groups, the one or more STA groups comprise a first STA group, the first STA group comprises the second STA, and the first indication information is used to indicate that: one or more STAs in the first STA group comprise low-latency traffic to be transmitted, and/or one or more STAs in the first STA group need to preempt the first TXOP.

64. The device according to claim 63, wherein the device is further configured to:
transmit a first trigger frame;
wherein the first trigger frame comprises a first field, and the first field is used to indicate one or more of: a number of STAs in the first STA group, and a number of the one or more STA groups.

65. The device according to claim 64, wherein the first trigger frame further comprises a second field, and the second field is used to indicate a minimum association identifier of the plurality of STAs associated with the AP.

66. The device according to any one of claims 61 to 65, wherein the first uplink transmission is transmitted via a first-type physical layer protocol data unit (PPDU); a long training field (LTF) field in a preamble of the first-type PPDU is not uplink transmitted on the reserved one or more frequency domain units.

67. The device according to any one of claims 61 to 66, wherein the first indication information is reported via one or more of null data physical protocol data units (NDPs) comprising: a high efficiency trigger based feedback NDP (HE TB feedback NDP), a high efficiency sounding NDP (HE sounding NDP), an extremely high throughput sounding NDP (EHT sounding NDP), and an ultra high reliability sounding NDP (UHR sounding NDP).

68. The device according to any one of claims 61 to 66, wherein the first indication information is reported via a second-type PPDU; and the first indication information is carried in an LTF field in a preamble of the second-type PPDU.

69. The device according to any one of claims 61 to 66, wherein the first indication information is reported via a third-type PPDU; and the first indication information is carried in a data field of the third-type PPDU.

70. The device according to claim 69, wherein the first indication information is carried in one or more LTF symbols in the data field.

71. The device according to claim 69, wherein the first indication information is reported via a clear-to-send (CTS) frame carried by the data field.

72. The device according to any one of claims 69 to 71, wherein a scrambler seed of the data field meets one or more of: predefined, pre-notified, and indicated by a trigger frame.

73. A communication device, comprising a memory and a processor, wherein the memory is configured to store a program, and the processor is configured to invoke the program stored in the memory, to cause the communication device to perform the method according to any one of claims 1 to 36.

74. An apparatus, comprising a processor, configured to invoke a program from a memory, to cause the apparatus to perform the method according to any one of claims 1 to 36.

75. A chip, comprising a processor, configured to invoke a program from a memory, to cause a device equipped with the chip to perform the method according to any one of claims 1 to 36.

76. A computer-readable storage medium, having a program stored thereon, wherein the program causes a computer to perform the method according to any one of claims 1 to 36.

77. A computer program product, comprising a program, wherein the program causes a computer to perform the method according to any one of claims 1 to 36.

78. A computer program, wherein the computer program causes a computer to perform the method according to any one of claims 1 to 36.
